# EUROPEAN PATENT SPECIFICATION

(11) **EP 1 473 905 B1**
(45) Date of publication and mention of the grant of the patent: **13.09.2006**
(21) Application number: 04008315.6
(22) Date of filing: 06.04.2004
(51) Int. Cl.: H04L 29/06, G06F 17/30

(54) **Information management apparatus and method for facilitating the search of horizontal services**
Vorrichtung und Verfahren für das Informationmanagement zur Erleichterung der Suche von horizontalen Diensten
Dispositif et procédé de management d'informations pour faciliter la recherche de services horizontaux

(30) Priority: 30.04.2003 JP 2003125668
(43) Date of publication of application: 03.11.2004
(73) Proprietor: MATSUSHITA ELECTRIC INDUSTRIAL CO., LTD., Kadoma-shi, Osaka 571-8501 (JP)
(72) Inventor: Watanabe, Takahiro, Moriguchi-shi Osaka-fu 570-0006 (JP); Hamaki, Takayuki, Kyotanabe-shi Kyoto-fu 610-0352 (JP); Oashi, Masahiro, Kyotanabe-shi Kyoto-fu 610-0331 (JP)
(74) Representative: Gassner, Wolfgang

(56) References cited:
- WO-A-03/021978
- US-A1- 2002 083 043
- CZERWINSKI S E ET AL: "AN ARCHITECTURE FOR A SECURE SERVICE DISCOVERY SERVICE" MOBICOM '99. PROCEEDINGS OF THE 5TH ANNUAL ACM/IEEE INTERNATIONAL CONFERENCE ON MOBILE COMPUTING AND NETWORKING. SEATTLE, WA, AUG. 15 - 20, 1999, ANNUAL ACM/IEEE INTERNATIONAL CONFERENCE ON MOBILE COMPUTING AND NETWORKING, NEW YORK, NY : ACM, US, vol. CONF. 5, 15 August 1999 (1999-08-15), pages 24-35, XP000896069 ISBN: 1-58113-142-9

## Description

### BACKGROUND OF THE INVENTION

### Field of the Invention

The present invention relates to an information management apparatus, and more particularly to an information management apparatus for managing service-related information in a system in which a plurality of electronic apparatuses are linked via a network so as to work in liaison with each other to implement a desired service.

### Description of the Background Art

Conventionally, there have been services implemented via the Internet. In an exemplary service, the user uses a personal computer to access the host of the service to acquire an application. In such a service, the service provider registers access addresses of hosts used for providing services in a directory-type search service. The user who wishes to receive a service accesses and searches the directory-type search service for an access address of the host which provides a desired service, thereby obtaining the access address of the host of the desired service. Thereafter, the user who wishes to receive the service accesses the host to download an application, for example. A standardized technology of such a directory-type search service is disclosed in Tom Bellwood et al., "UDDI Version 3.0", July 19, 2002, searched via the Internet at http://uddi.org/pubs/uddi-v3.00-published-20020719.htm on April 25, 2003.

In recent years, a number of mobile or stationary consumer electronics (CEs) capable of connecting to the Internet have appeared in the market. Such electronics are able to communicate with each other via the Internet, and therefore can be used in various manners which were not possible before. For example, it is conceivable that the user controls a plurality of apparatuses owned by him/herself so as to be linked with each other and downloads an application to each apparatus in which the application is activated so as to work in liaison with the one in another apparatus to implement a service. Hereinafter, a service implemented in this manner is referred to as a "horizontal service". In an exemplary horizontal service, the user uses a mobile phone or the like to program a VCR located at home to record a preselected TV program via the Internet.

As is apparent from the above, in the horizontal service, a plurality of apparatuses are used for implementing one service. Accordingly, in order to search a service which can achieve the user's goal, the user is required to search a service which can be implemented by a combination of apparatuses owned by him/herself.

However, there is no conventional system which is able to search for the above-described horizontal service by a combination of apparatuses owned by the user. Therefore, the user is not able to readily search for a horizontal service which can achieve the user's desired goal.

Further, in the horizontal service, it is necessary to install a necessary application into a plurality of apparatuses to be used in the service. Accordingly, the user is required to access the host of the service to download the necessary application into each of the apparatuses, resulting in an increase in the number of accesses to the host of the service provider and an increase in communication load on the network.

An information management apparatus for managing service-related information and a method employing such an apparatus is described in the WO 03/021978 A.

### SUMMARY OF THE INVENTION

Therefore, an object of the present invention is to provide a service search system capable of reducing the number of accesses to a server and thereby to reduce communication load on the network.

The present invention has the following features to attain the object mentioned above.

The present invention is directed to an information management apparatus for managing service-related information in a system in which a plurality of electronic apparatuses are linked via network so as to work in liaison with each other to implement a desired service in accordance with claim 1. Specifically, the apparatus includes: a service-specific information acquisition section for acquiring service-specific information which is related to a combination of types of electronic apparatuses required for implementing a service; a storage section for storing at least one piece of service-specific information acquired by the service-specific information acquisition section; an apparatus-specific information acquisition section for acquiring apparatus-specific information which is related to each of the plurality of electronic apparatuses; a request reception section for receiving search requests from the electronic apparatuses; a search section for, responsive to a search request received by the request reception section, searching for the service, which can be implemented by the electronic apparatuses, based on the service-specific information stored in the storage section and the apparatus-specific information acquired by the apparatus-specific information; and a transmission section for transmitting to the electronic apparatuses a search result which is information indicating a listing of services which can be implemented by the electronic apparatuses. The service-specific information further contains information related to an application operable on each of the electronic apparatuses and used for implementing the service. Furthermore, the information management apparatus includes an update notification section for, if the information related to the application indicates an update of the application, notifying the electronic apparatuses that the application has been updated.

Further still, the information management apparatus may further include an application acquisition section for, if the information related to the application indicates that an updated version of the application is available, acquiring the updated version of the application, whereinwhen the electronic apparatuses are notified of the update of the application, if the electronic apparatuses provide the transmission section with a notice for downloading the updated application, the transmission section adapted to transmit the updated application to the electronic apparatuses.

Further still, the information management apparatus may further include: a latest application acquisition section for acquiring a latest application associated with service-specific information stored in the storage section; and an application storage section for storing the latest application acquired by the latest application acquisition section, wherein the transmission section, responsive to a request from the electronic apparatuses, transmits to the electronic apparatuses the latest application to be used by the electronic apparatuses to implement the service.

Further still, a server for managing the service-specific information may be present on the network, the apparatus-specific information acquisition section may be adapted to acquire the apparatus-specific information associated with the electronic apparatuses from the electronic apparatuses; and the service-specific information acquisition section may be adapted to acquire the service-specific information from the server for managing the service-specific information which is present on the network.

Further still, the information management apparatus may further include: an inquiry section for inquiring of the server for managing the service-specific information which is present on the network. whether the service-specific information stored in the storage section has been updated; and a notification section for, if a result of the inquiry by the inquiry section indicates an update of the service-specific information, notifying the electronic apparatuses the service-specific information has been updated.

Further still, the inquiry section may be adapted to make an inquiry to the server at regular intervals.

Further still, the information management apparatus may further include an update section for, if a result of the inquiry by the inquiry section indicates an update of the service-specific information, updating the service-specific information stored in the storage section.

Further still, the apparatus-specific information acquisition section may be adapted to acquire the apparatus-specific information associated with the electronic apparatuses from the electronic apparatuses, and the service-specific information acquisition section may be adapted to acquire the service-specific information from the electronic apparatuses.

Further still, the information related to the combination of the types of the electronic apparatuses which is contained in the service-specific information may be related to a combination of models of the electronic apparatuses, the information management apparatus may further include a specification section which refers to the service-specific information stored in the storage section and related to the service to be implemented by the electronic apparatuses, and specifies a model of one electronic apparatus which works in liaison with another electronic apparatus to implement the service, and the transmission section may be adapted to transmit information which indicates the electronic apparatuses specified by the specification section to the electronic apparatuses which are used to implement the service.

Further still, the information management apparatus may further include: a cease confirmation section for confirming the presence or absence of a ceased service corresponding to the service-specific information stored in the storage section; and a request section for, if the cease confirmation section determines that there is the ceased service among services associated with the service-specific information stored in the storage section, requesting the electronic apparatuses having stored therein an application associated with the ceased service to delete the application therefrom.

Further still, the information management apparatus may further include: a cease confirmation section for confirming the presence or absence of a ceased service corresponding to the service-specific information stored in the storage section; and a deletion section for, if the cease confirmation section determines that there is the ceased service among services associated with the service-specific information stored in the storage section, deleting the service-specific information associated with the ceased service from the storage section.

Further still, the information management apparatus may further include: an apparatus-specific information storage section for storing the apparatus-specific information acquired by the apparatus-specific information acquisition section; and an information deletion section for, responsive to a request from the electronic apparatus, deleting the apparatus-specific information stored in the apparatus-specific information storage section.

Further still, the information deletion section, responsive to the request from the electronic apparatuses may be adapted to delete the apparatus-specific information while deleting service-specific information related to services for which the electronic apparatuses associated with the deleted apparatus-specific information are used from among service-specific information related to services which can be implemented by the electronic apparatuses.

Further still, when an additional electronic apparatus is added anew to the system, the apparatus-specific information acquisition section may be adapted to acquire from the additional electronic apparatus information related to a user of the additional electronic apparatus together with the apparatus-specific information, and the information management apparatus may further include: a user information management section for managing user-related information; a user authentication section for determining whether to register the apparatus-specific information acquired by the apparatus-sepcific information acquisition section using the user-related information managed by the user information management section and the user-related information acquired by the apparatus-specific information acquisition section; and an apparatus-specific information storage section for, if the user authentication section determines to register the apparatus-specific information, storing the apparatus-specific information acquired by the apparatus-specific information acquisition section.

Further still, the information management apparatus may further include: an apparatus-specific information storage section for storing apparatus-specific information transmitted from and associated with the electronic apparatuses; and an apparatus determination section for determining whether the apparatus-specific information corresponding to the electronic apparatuses associated with the service-specific information obtained by the search section is stored in the apparatus-specific information storage section.

Further still, the information management apparatus may further include an absent electronic apparatus notification section for, if the apparatus determination section determines that the apparatus-specific information corresponding to a type of an electronic apparatus associated with the service-specific information obtained by the search section is not stored in the apparatus-specific information storage section, notifying the electronic apparatuses, which have provided a search request, of the type of the electronic apparatus corresponding to the apparatus-specific information which is not stored in the apparatus-specific information storage section.

Further still, if the apparatus determination section determines that the apparatus-specific information corresponding to the type of the electronic apparatus associated with the service-specific information obtained by the search section is not stored in the apparatus-specific information storage section, the storage section may not store the service-specific information obtained by the search section.

Note that the present invention is directed not only to the information management as described above, but also to a method of managing information in the information management apparatus in accordance with claim 17.

According to the present invention, a listing of services which can be implemented by the user's electronic apparatus is transmitted to the electronic apparatus, and therefore the user is able to readily search for implementable horizontal services.

Further, the electronic apparatus is notified through application-related information that an application has been updated, and therefore the electronic apparatus is able to recognize that the application has been updated.

Furthermore, the information management apparatus has an updated application stored therein and transmits the updated application to the electronic apparatus if necessary, and therefore the electronic apparatus is able to automatically acquire a latest application. Accordingly, there are no cases where the user is not able to receive a service for the reason that an application stored in the electronic apparatus has not been updated.

Further still, the user acquires the latest application before implementing a service, and therefore if by any possibility, a malfunction occurs at the time of implementing the service, it occurs not for the reason that the application is of a previous version.

Further still, the information management apparatus regularly inquires of the server whether there is update information related to each service, and therefore the user is able to check the update information for all electronic apparatuses at one time. Moreover, the user is not required to access the server to check the update information for individual electronic apparatuses, and therefore load on both the server and communication lines can be reduced.

Further still, the regular inquiries allow the user to regularly acquire the update information.

Further still, the presence of the update section allows the service-specific information stored in the information management apparatus to be always kept updated. Accordingly, the user is able to acquire latest information about services, which can be received by the electronic apparatus, from the information management apparatus at any desired time.

Further still, the user's electronic apparatus receives information about another electronic apparatus, which works in liaison with the user's electronic apparatus to implement a service, at the time of implementing the service, and therefore the user is able to know which electronic apparatus is used in liaison with the user's electronic apparatus.

Further still, if a service is ceased, the electronic apparatus is requested to delete an application related to the ceased service, and therefore unnecessary information is automatically deleted from the electronic apparatus.

Further still, if a service is ceased, service-specific information related to the service is deleted, and therefore unnecessary information is automatically deleted from the information management apparatus.

Further still, the apparatus-specific information is deleted in accordance with a request from the electronic apparatus, and therefore the information management apparatus is prevented from accumulating unnecessary information.

Further still, the apparatus-specific information is deleted together with service-specific information associated therewith, and therefore the information management apparatus is prevented from accumulating unnecessary information.

Further still, user authentication is performed simultaneously with registration of the apparatus-specific information, and therefore it is possible to prevent unauthorized accessfrom unregistered electronic apparatusesto the information management apparatus.

Further still, the user's electronic apparatus is notified of a type of an absent electronic apparatus required for implementing a service, and therefore the user is able to recognize the type of an electronic apparatus required for the service. Moreover, the service provider is able to facilitate proliferation of electronic apparatuses.

Further still, if a service cannot be implemented for the reason of an absence of an electronic apparatus, the storage section does not store service-specific information related to the service, and therefore the information management apparatus is prevented from accumulating unnecessary information.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing an exemplary structure of an entire service search system according to a first embodiment of the present invention;
FIG. 2 is a table showing exemplary apparatus-specific information;
FIG. 3 is a table showing exemplary service specific-information according to the first embodiment of the present invention;
FIG. 4 is a block diagram schematically illustrating the service search system according to the first embodiment of the present invention;
FIG. 5 is a flowchart showing an operation for registering a new electronic apparatus which is performed by the service search system according to the first embodiment;
FIG. 6 is a flowchart showing operations to be performed by the service search system according to the first embodiment when an information management apparatus inquires about an update of service-specific information;
FIG. 7 is a flowchart showing an operation to be performed by the service search system according to the first embodiment when an electronic apparatus downloads an updated application;
FIG. 8 is a flowchart showing a portion of an operation to be performed by the service search system according to the first embodiment when service X is implemented;
FIG. 9 is a flowchart showing another portion of the operation to be performed by the service search system according to the first embodiment when service X is implemented;
FIG. 10 is a flowchart showing still another portion of the operation to be performed by the service search system according to the first embodiment when service X is implemented;
FIG. 11 shows an example of service-specific information according to a second embodiment; and
FIG. 12 shows an example of service-specific information according to a third embodiment.

### DESCRIPTION OF THE PREFERRED EMBODIMENTS

### (First Embodiment)

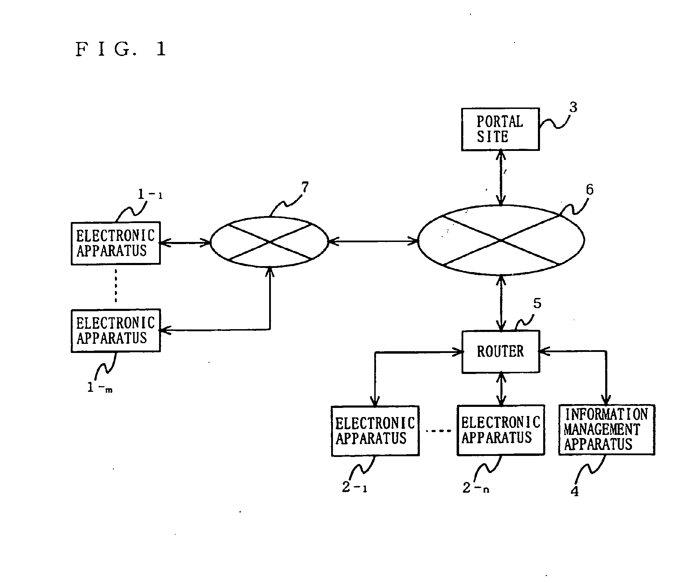

A service search system according to a first embodiment of the present invention will be described below with reference to drawings. FIG. 1 is a block diagram showing an exemplary structure of the entire service search system according to the present embodiment.

The service search system includes electronic apparatuses 1₋₁ to 1₋ₘ, electronic apparatuses 2₋₁ to 2₋ₙ, a server 3 which manages a portal site (hereinafter, simply referred to as a "portal site 3"), an information management apparatus 4, a router 5, the Internet 6, and a mobile telephone network 7. Note that in the following descriptions, an electronic apparatus 1 or 2 refers to any one of the electronic apparatuses 1₋₁ to 1₋ₘ or 2₋₁ to 2₋ₙ. The service search system searches for a service, which can be implemented by electronic apparatuses owned by the user, from among services intended for an electronic apparatus 1 (e.g., a mobile telephone) and an electronic apparatus 2 (e.g., a VCR) to work in liaison with each other to achieve a desired goal (e.g., the VCR is programmed to record a preselected TV program). Further, the service search system notifies a search result to the electronic apparatuses owned by the user. Furthermore, the service search system allows each of the electronic devices to download software required for implementing a service shown by the search result.

Each of the electronic apparatus 1₋₁ to 1₋ₘ is implemented by, for example, a mobile telephone, a PDA, or the like, and has a function of downloading software from the portal site 3 and implementing the downloaded software, thereby operating an electronic apparatus(es) 2. Therefore, each of the electronic apparatus 1₋₁ to 1₋ₘ includes a communication section for downloading software, a storage section for storing the downloaded software, a control section for implementing the stored software, an input section for the user to input an instruction, and a display section for presenting information to the user. Note that these elements are not shown in FIG. 1.

Each of the electronic apparatus 2₋₁ to 2₋ₙ is implemented by, for example, a digital still camera (DSC), a digital video camera (DVC), a digital television (DTV) , a home server, a set-top box (STB), or an electronic safe deposit box. Each of the electronic apparatus 2₋₁ to 2₋ₙ has a function of downloading software from the portal site 3 and implementing the downloaded software. A given service is implemented in liaison between electronic apparatuses 1 and 2. Similar to the electronic apparatuses 1₋₁ to 1₋ₘ, the electronic apparatuses 2₋₁ to 2₋ₙ each include a communication section for downloading software , a storage section for storing the downloaded software, a control section for implementing the stored software, an input section for the user to input an instruction, and a display section for presenting information to the user. Note that these elements are not shown in FIG. 1.

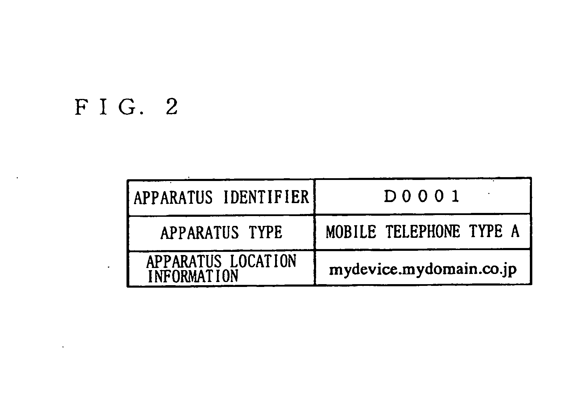

Each of the electronic apparatuses 1₋₁ to 1₋ₘ and 2₋₁ to 2₋ₙ has apparatus-specific information as shown in FIG. 2 stored in its storage section. The apparatus-specific information is specific and related to individual electronic apparatuses. FIG. 2 is a table showing exemplary apparatus-specific information. The apparatus-specific information contains an apparatus identifier, an apparatus type, and apparatus location information. The apparatus identifier is assigned by the information management apparatus 4 to each of the electronic apparatuses 1₋₁ to 1₋ₘ and 2₋₁ to 2₋ₙ. The apparatus identifier is effective among the information management apparatus 4, and the electronic apparatuses 1₋₁ to 1₋ₘ and 2₋₁ to 2₋ₙ registered in the information management apparatus 4. The apparatus type indicates the type of the electronic apparatus. For example, the apparatus type may indicate a model or a function of the electronic apparatus. The apparatus location information is address information by which another electronic apparatus can access the electronic apparatus.

The portal site 3 is a service site which provides services intended to be implemented by a variety of types of apparatuses via the Internet. For example, the portal site 3 is managed and operated by the service provider. Specifically, for each available service, the portal site 3 manages service-specific information which indicates types of electronic apparatuses required for implementing the service. Further, the portal site 3 has stored therein applications by which the electronic apparatuses can implement the services. The portal site 3 is operable to, in response to a request from an electronic apparatus 1 or 2, transmit an application to the electric apparatus 1 or 2. In order to realize this, the portal site 3 includes a communication section for transmitting an application and the like, a storage section for storing the application and service-specific information, and a control section for searching for an application requested by the electronic apparatus 1 or 2. Note that these elements are not shown in FIG. 1.

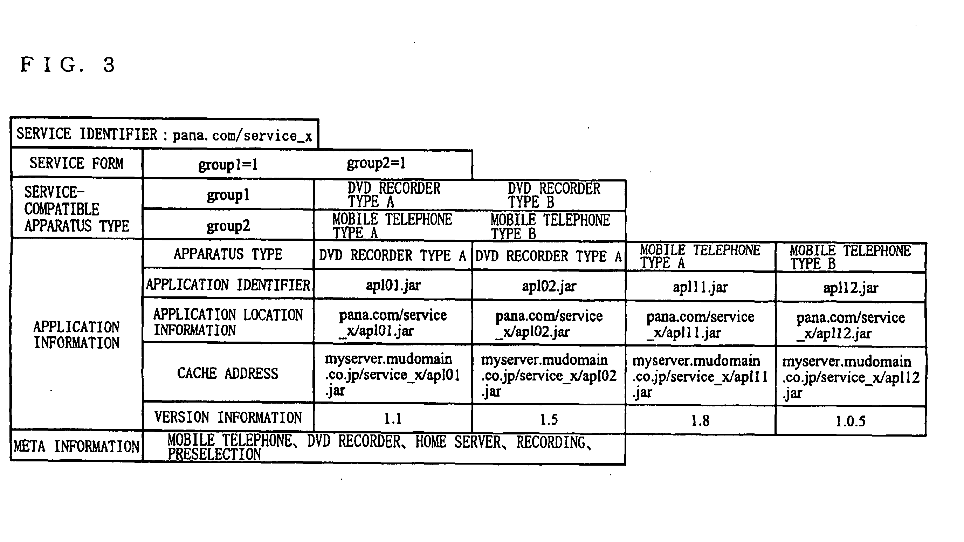

The service-specific information is now described with reference to FIG. 3. The service specific-information contains at least information related to a combination of types of electronic apparatuses required for implementing the service. FIG. 3 is a table showing exemplary service specific-information. In FIG. 3, the service-specific information contains a service identifier, a service-compatible apparatus type, application information, and meta information.

The service identifier specifies the service itself. If the service identifier is described using a namespace, which is a character string for specifying the service, the service identifier may be represented by, for example, "pana.com/service_x" or may be an identifier which can be uniquely identified in a global space. For example, the service identifier can be a content ID defined by the Content ID Forum (Japan).

The service form is information which indicates the number of electronic apparatuses required for realizing the service. Specifically, the service form shown in FIG. 3 indicates that service X can be implemented by a combination of one electronic apparatus in group 1 and one electronic apparatus in group 2.

The service-compatible apparatus type indicates types of electronic apparatuses corresponding to roles in the service. Specifically, in FIG. 3, DVD recorder types A and B correspond to the type of electronic apparatuses having the role of group 1, and mobile telephones A and B correspond to the type of electronic apparatuses having the role of group 2.

The application information is related to an application to be operated on electronic apparatuses which implement the service. The application information contains an apparatus type, an application identifier, application location information, a cache address, and version information.

Electronic apparatuses listed in the service-compatible apparatus type are registered in the apparatus type. The application identifier specifies applications used by the electronic apparatuses registered in the apparatus type. Note that the application identifier may be globally unique and described by a URL (e.g., pana.com/service_ x/ap101.jar). The application location information indicates locations from which the applications are downloaded. The cache address indicates addresses at which the information management apparatus 4 has cached the applications to be operated on electronic apparatuses which implement the service. Note that if the information management apparatus 4 has the applications cached therein, information for accessing the cache may be described in the cache address. The version information is related to versions of the applications to be operated on electronic apparatuses which implement the service.

Note that the service-specific information may be structured so as to contain information (a pointer) for accessing the application information. Further, the service-specific information may contain applications to be operated on electronic apparatuses used for implementing a desired service.

The meta information contains keyword information for specifying the details of the service.

Referring to FIG. 1, the information management apparatus 4 manages registered information related to the electronic apparatuses 1₋₁ to 1₋ₘ and 2₋₁ to 2₋ₙ connected to a virtual network realized by using virtual private network (VPN) technology. Specifically, the information management apparatus 4 manages apparatus-specific information as shown in FIG. 2 for each of the electronic apparatuses 1₋₁ to 1₋ₘ and 2₋₁ to 2₋ₙ. Further, the information management apparatus 4 manages service-specific information for each service which can be implemented by combinations of the registered electronic apparatuses 1₋₁ to 1₋ₘ and 2₋₁ to 2₋ₙ. In response to a request from an electronic apparatus 1, the information management apparatus 4 searches for services, which can be implemented by using the requesting electronic apparatus 1, based on the apparatus-specific information and the service-specific information. Then, the information management apparatus 4 transmits a service listing as a search result to the electronic apparatus 1. The information management apparatus 4 is implemented by a home server, and includes a storage section for storing information as described above, a communication section for communicating with the electronic apparatuses 1₋₁ to 1₋ₘ and 2₋₁ to 2₋ₙ and the portal site 3, and a control section for carrying out, for example, a search for information as described above. Note that these elements are not shown in FIG. 1. The information management apparatus 4 may be incorporated in either one of an electronic apparatus 1, an electronic apparatus 2, a DSC, a DTV, a home server, an STB, a mobile telephone, and a PDA, for example.

The router 5 routes, based on a routing table stored therein, information received via the Internet 6 to the electronic apparatus 2 or the information management apparatus 4. Also, the router 5 transmits, based on the routing table, information received from the electronic apparatus 2 or the information management apparatus 4 to the Internet 6.

The Internet 6 is connected among the portal site 3, the router 5, and the mobile telephone 7 to enable information exchange between them. The mobile telephone network 7 is connected among mobile telephones and connected to the electronic apparatuses 1₋₁ to 1₋ₘ and the Internet 6.

Operations of the thus-structured service search system according to the present embodiment will be described below. Each process described in the following can be implemented by software used by a computer or by a hardware circuit specialized for the process.

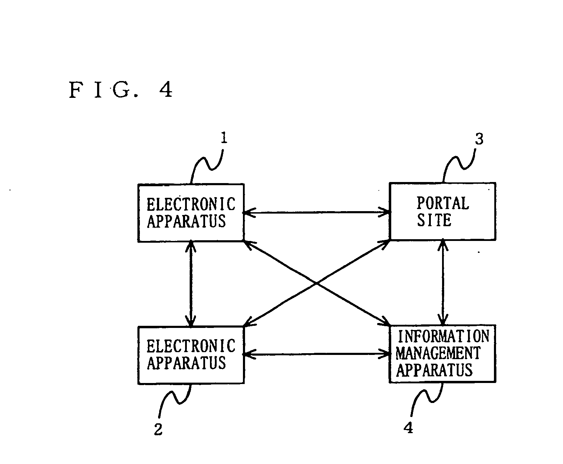

For ease of description, FIG. 4 is referred to for the structure of the service search system instead of referring to FIG. 1. FIG. 4 is a block diagram schematically illustrating the system structure shown in FIG. 1. In FIG. 4, an electronic apparatus 1 corresponds to one of the electronic apparatuses 1₋₁ to 1₋ₘ shown in FIG. 1, and is a mobile telephone, for example. An electronic apparatus 2 corresponds to one of the electronic apparatuses 2₋₁ to 2₋ₙ shown in FIG. 1, and is a DVD recorder, for example. The portal site 3 and the information management apparatus 4 are the same as those shown in FIG. 1. Note that the router 5, the Internet 6, and the mobile telephone network 7 are not omitted in FIG. 4.

As shown in FIG. 4, when more than one electronic apparatus is connected to the information management apparatuses 4, a service can be provided to the user by operating applications on different electronic apparatuses so as to work in liaison with each other.

Here, consider an exemplary case where the electronic apparatus 1 is a mobile telephone, the electronic apparatus 2 is a recording apparatus, such as a DVD recorder, and the information management apparatus 4 is a home server. In this case, as an example of implementing a service by using two electronic apparatuses, i.e., the electronic apparatuses 1 and 2, it is conceivable to program a DVD recorder located at home to record a preselected TV program by means of a mobile telephone located out of home.

In such an example, the electronic apparatus 1 is required to have an application (i.e., software) for acquiring information required for preselecting a TV program (hereinafter, referred to as "program information" ) and transmitting information for programming to record the preselected TV program (hereinafter, referred to as "programming information") to the electronic apparatus 2. The electronic apparatus 2 is required to have an application for receiving the programming information transmitted from the electronic apparatus 1 and performing a recording in accordance with the programming information. These applications on their respective electronic apparatuses are operated so as to work in liaison with each other to implement a service as described above.

However, a possible combination of electronic apparatuses for implementing a service may vary depending on the user's system environment. If applications for all possible combinations of electronic apparatuses are previously installed in each of the electronic apparatuses, each electronic apparatus is required to have a large memory. This is not practical because each electronic apparatus is required to have stored in its memory applications for unnecessary combinations of electronic apparatuses.

Accordingly, in the present embodiment, the information management apparatus 4 for managing the electronic apparatuses accesses the portal site 3 having stored therein information used for applications on different electronic apparatuses to work in liaison with each other to implement various services. Service-related information required by the user is downloaded from the portal site 3 as necessary, and registered into the information management apparatus 4. Further, if a service is updated at the portal site 3 after the registration of the service-related information, the information management apparatus 4 detects the update of the service, and updates the registered information as necessary. Operations of the service search system according to the present embodiment are now described below.

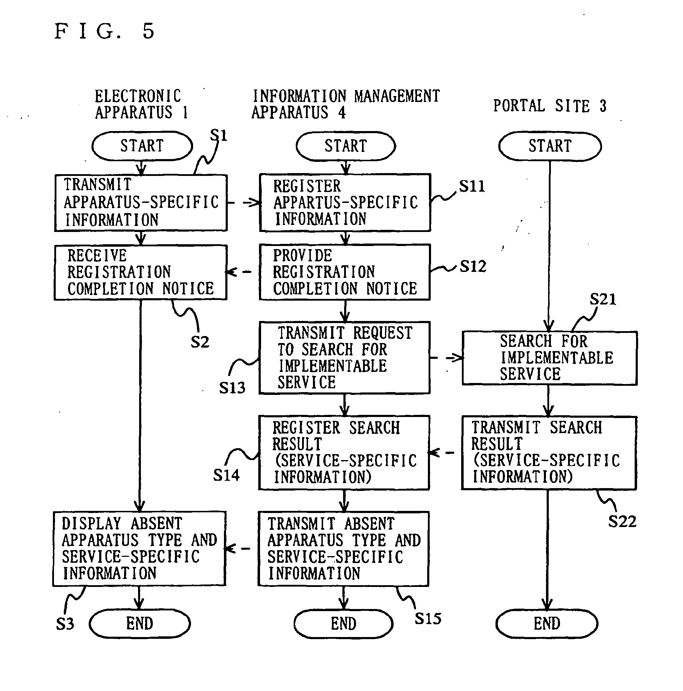

In the case where an electronic apparatus 1 is added anew to the user's system environment for implementing a service, e.g. , in the case where a mobile telephone is purchased anew, in order to associate the mobile telephone with the environment (a virtual network) for allowing electronic apparatuses (which are registered in the information management apparatus 4, in this case) to implement services, the mobile telephone is required to be registered into the information management apparatus 4. Hereinafter, an operation to be performed by the service search system according to the present embodiment when an electronic apparatus 1 is registered into the informationmanagement apparatus 4 is described with reference to FIG. 5. FIG. 5 is a flowchart showing operations to be performed by the electronic apparatus 1, the information management apparatus 4, and the portal site 3 in order to register the electronic apparatus 1 anew into the information management apparatus 4.

Firstly, the electronic apparatus 1 acquires address information which indicates where the information management apparatus 4 is located. Then, the electronic apparatus 1 accesses and requests the information management apparatus 4 to register the electronic apparatus 1 itself into the information management apparatus 4, and transmits apparatus-specific information, which as shown in FIG. 2, contains an apparatus identifier, an apparatus type, and an apparatus location information, to the information management apparatus 4 (step S1). Accordingly, the information management apparatus 4 acquires the apparatus-specific information.

The information management apparatus 4 having acquired the apparatus-specific information registers the acquired apparatus-specific information therein (step S11). Thereafter, the information management apparatus 4 provides the electronic apparatus 1 with a registration completion notice that the acquired apparatus-specific information has been registered (step S12). Accordingly, the electronic apparatus 1 receives the registration completion notice (step S2). Upon receipt of the notice, the electronic apparatus 1 displays on its display screen (not shown) information that the registration has been completed. This allows the user of the electronic apparatus 1 to confirm that the apparatus-specific information of the electronic apparatus 1 has been registered. Note that by performing user authentication simultaneously with registering the apparatus-specific information, it is made possible to prevent the apparatus-specific information from being registered by a third party other than the user, thereby increasing security of the registration. Specifically, when the informationmanagement apparatus 4 acquires from the electronic apparatus 1 information related to the user of the electronic apparatus 1 together with the apparatus-specific information, the information management apparatus 4 performs user authentication based on user-related information stored therein and the acquired information related to the user of the electronic apparatus 1. If the user authentication is successful and thus the information management apparatus 4 verifies that the user of the electronic apparatus 1 is registered, the information management apparatus 4 stores the acquired apparatus-specific information therein.

After having registered the apparatus-specific information, the information management apparatus 4 transmits to the portal site 3 a search request to search for what service can be implemented by using the electronic apparatus 4 in liaison with another electronic apparatus (step S13). Specifically, the information management apparatus 4 transmits to the portal site 3 information related to the apparatus type contained in the apparatus-specific information of the electronic apparatus 1 acquired at step S11. Accordingly, the portal site 3 receives the search request.

Upon receipt of the search request, the portal site 3 searches for what service can be implemented by using the electronic apparatus 1 in liaison with another electronic apparatus (step S21). Specifically, the portal site 3 refers to the field of the service-compatible apparatus type of the service-specific information as shown in FIG. 3 which is stored in the storage section thereof, and presents a listing of service-specific information containing the electronic apparatus 1 as the apparatus type. Thereafter, the portal site 3 transmits a search result (i.e., the listing of service-specific information) to the information management apparatus 4. Accordingly, the information management apparatus 4 acquires the service-specific information as the search result.

Upon receipt of the service-specific information as the search result, the information management apparatus 4 registers the received service-specific information into its storage section which is not shown, e.g. , a hard disc, a memory, etc. (step S14) . Note that the information management apparatus 4 also checks the apparatus type (or the service-compatible apparatus type) of the service-specific information against the apparatus type of previously registered apparatus-specific information, and determines whether there is a service which can be provided by using a plurality of electronic apparatuses registered in the information management apparatus 4. If there is such a service, the information management apparatus 4 may check whether the service can be actually implemented by the electronic apparatus 1 registered anew and another electronic apparatus 2. This increases the reliability of providing a service when the user actually wishes to receive the service.

The information management apparatus 4 notifies the user' s electronic apparatus 1 of the apparatus type of an electronic apparatus, which is not included in combinations indicated by the apparatus-specific information registered in the information management apparatus 4, and service-specific information corresponding to the electronic apparatus (step S15). In this case, the information management apparatus 4 may provide the user with information about a service which can be provided if a new electronic apparatus is introduced. Then, the electronic apparatus 1 displays the provided information (step S3). Regarding the above operations at steps S15 and S3, it is conceivable that in the case where there are only a mobile telephone and a home server, the home server causes the mobile telephone to display a notice related to the service-specific information as shown in FIG. 3, which indicates that if a DVD recorder is purchased anew, it is possible to implement a service of programming the DVD recorder located at home to record a preselected TV program by means of the mobile telephone located out of home. Such a notice facilitates the sale of an electronic apparatus to the user.

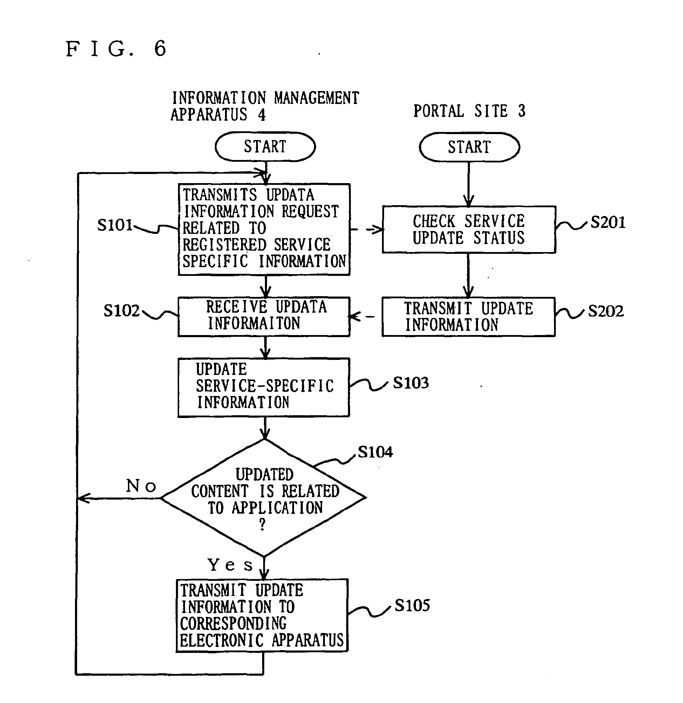

Next, operations to be performed by the information management apparatus 4 and the portal site 3 when the information management apparatus 4 updates the service-specific information are described with reference to FIG. 6. FIG. 6 is a flowchart showing operations to be performed by the information management apparatus 4 and the portal site 3 when the information management apparatus 4 updates the service-specific information.

Firstly, in order to check whether there is a content of the service-specific information which has been updated, the information management apparatus 4 transmits a request for update information to the portal site 3 (step S101). Accordingly, the portal site 3 receives the request. Upon receipt of the request, the portal site 3 checks whether there is an updated content in the service-specific information (step S201). Thereafter, the portal site 3 transmits the update information to the information management apparatus 4 (step S202). Accordingly, the information management apparatus 4 receives the update information transmitted from the portal site 3 (step S102). Specifically, at step S101, the information management apparatus 4 transmits a service identifier contained in the service-specific information stored therein. At step S201, the portal site 3 retrieves, from the storage section thereof, an updated portion of the service identifier (i.e., any updated portions of the service form, the service-compatible apparatus type, the application information, and the meta information). At step S202, the retrieved portion is transmitted.

Note that at step S201, the information management apparatus 4 may refer to version information for the date and time when the application information is created, thereby checking if the service-specific information has been updated, and at step S202, an updated portion of the service-specific information may be transmitted.

Upon receipt of the update information at step S102, the information management apparatus 4 updates a content of the service-specific information which corresponds to the update information (step S103). Then, the information management apparatus 4 determines whether the updated content of the service-specific information is related to an application installed in an electronic apparatus and required for implementing the service (step S104). If the updated content is related to such an application, the procedure proceeds to step S105. On the other hand, if the updated content is not related to the application, the procedure returns to step S101.

When the updated content is determined as being related to the application, the information management apparatus 4 transmits update information for notifying that the application has been updated to an electronic apparatus 1 or 2 corresponding to the application (step S105). Accordingly, the corresponding electronic apparatus 1 or 2 receives the update information, and downloads an update of the application based on the update information. Then, the procedure returns to step S101. Note that the operations shown in FIG. 6 may be performed at prescribed time intervals if the information management apparatus 4 and the portal site 3 are able to maintain a continuous connection to each other. Alternatively, if it is not possible to maintain continuous connection, the operations shown in FIG. 6 may be performed for each time point when communication between the information management apparatus 4 and the portal site 3 becomes available.

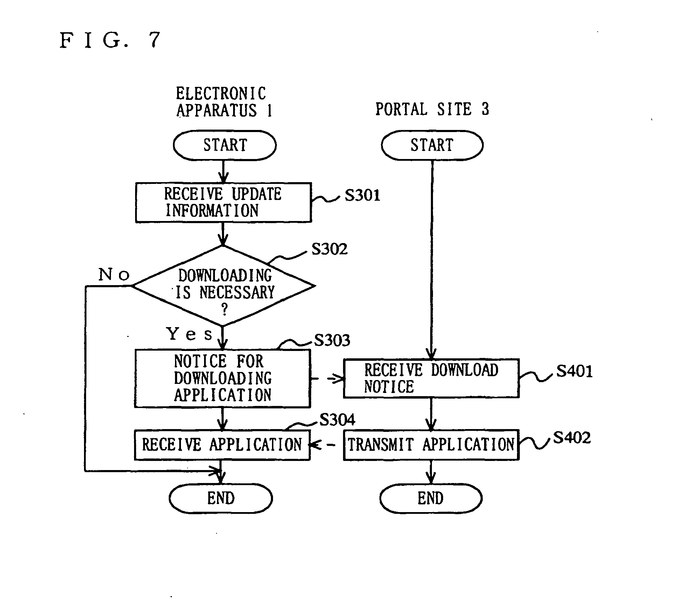

Next, an operation to be performed by the system according to the present embodiment will be described with reference to a flowchart of FIG. 7 and with respect to a case where an electronic apparatus 1 or 2 having received the update information transmitted at step S105 downloads the update of the application based on the received updated information. The following description is provided on the premise that the update information is received by the electronic apparatus 1.

Firstly, the procedure of FIG. 7 is started when the electronic apparatus 1 receives the update information from the information management apparatus 4 (step S301).

Next, the electronic apparatus 1 displays a message on the display screen or the like to prompt the user to decide whether it is necessary to update an application corresponding to the update information. In response to the message, the user operates the input section of the electronic apparatus 1 to input whether it is necessary to download an update of the application. In response to the user's input, the electronic apparatus 1 determines whether it is necessary to download the update of the application (step S302). If it is necessary to download the update, the procedure proceeds to step S303. On the other hand, if it is not necessary to download the update, the procedure is terminated.

When downloading is determined to be necessary, the electronic apparatus 1 transmits to the portal site 3 a download notice for downloading the update of the application (step S303) . Accordingly, the portal site 3 receives the download notice (step S401). Then, the portal site 3 reads the update of the application from the storage section thereof, and transmits the read update to the electronic apparatus 1 (step S402). Accordingly, the electronic apparatus 1 receives the update of the application (step S304), thereby acquiring the update of the application.

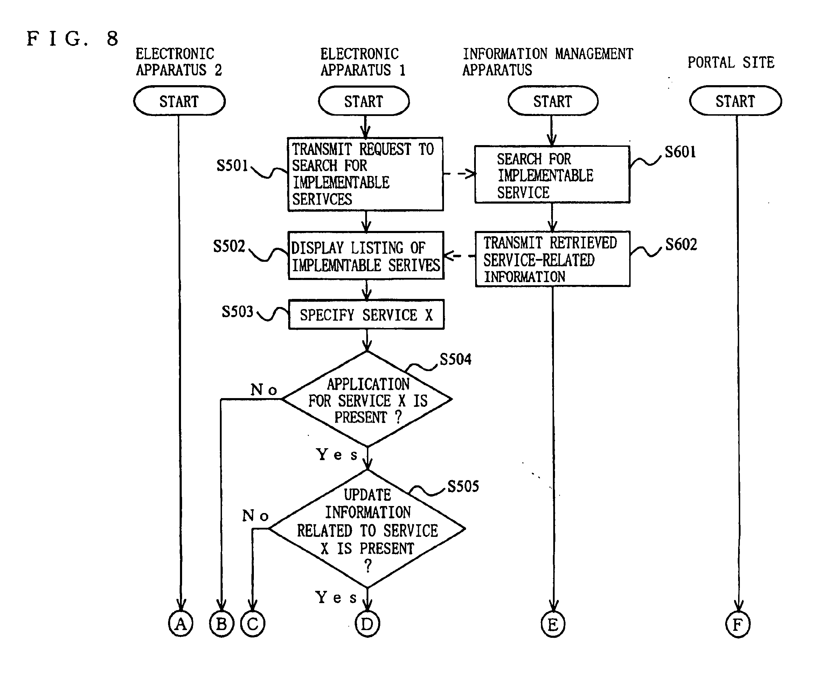

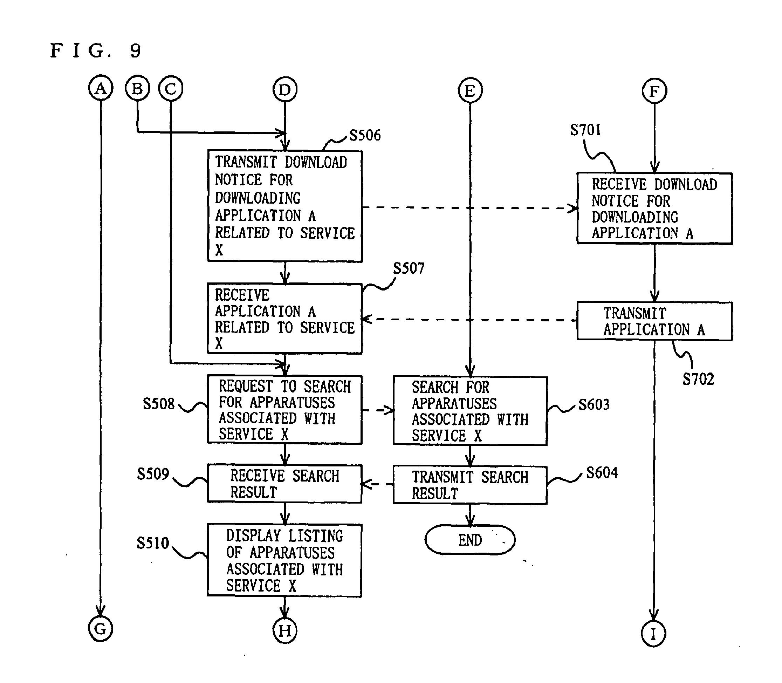

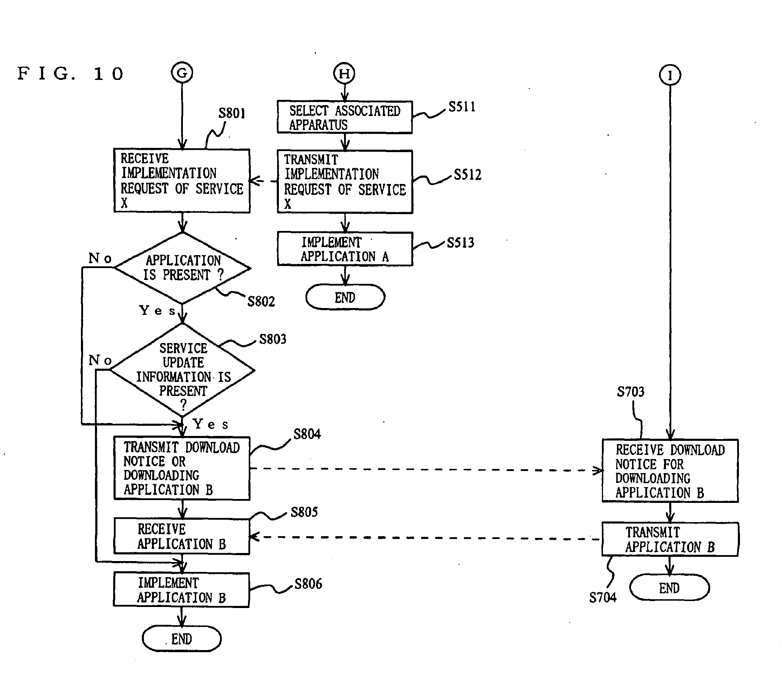

Next, operations to be performed by the electronic apparatuses 1 and 2, the information management apparatus 4, and the portal site 3 will be described with reference to FIGS. 8-10 and with respect to a case where the electronic apparatuses 1 and 2 work in liaison with each other to implement a service in the service search system according to the present embodiment. FIGs. 8-10 show a flowchart of operations to be performed by the electronic apparatuses 1 and 2, the information management apparatus 4, and the portal site 3 when a service is implemented in accordance with the present embodiment. An exemplary service is described below with respect to a case where the electronic apparatuses 1 and 2 are a mobile telephone and a DVD recorder, respectively, and the user programs the DVD recorder to record a preselected TV program by means of the mobile telephone.

Firstly, the user operates the electronic apparatus 1 to designate the apparatus identifier of the electronic apparatus 2 and to transmit to the information management apparatus 4 a search request to search for service-specific information corresponding to the designated electronic apparatus 2 (step S501). Accordingly, the information management apparatus 4 receives the search request. Note that the search request may be provided by the user operating the electronic apparatus 1 to transmit a keyword to the information management apparatus 4 and thereby to cause the information management apparatus 4 to search for the service-specific information based on the meta information as shown in FIG. 3.

Upon receipt of the search request, the information management apparatus 4 refers to the search request for the apparatus identifier and the apparatus-specific information of the electronic apparatus 2, and searches for service-specific information containing the apparatus type of the electronic apparatus 2 (step S601). Then, the information management apparatus 4 transmits to the electronic apparatus 1 the service-specific information containing one ormore search results (step S602). Accordingly, the electronic apparatus 1 acquires the service-specific information.

If the user requests to perform a search by keyword without designating the apparatus identifier, the information management apparatus 4 may transmit to the electronic apparatus 1 all information corresponding to service-related information which is stored in the information management apparatus 4 and related to services which can be implemented by using electronic apparatuses registered in the information management apparatus 4.

The electronic apparatus 1 having acquired the service-specific information displays the acquired service-specific information on the display screen thereof (step S502), thereby prompting the user to select a service to be implemented. In response to this, the user operates the input section of the electronic apparatus 1 to select a service to be implemented (which is referred to below as "service X"), thereby specifying the service X to be implemented (step S503).

Next, the electronic apparatus 1 searches through applications stored therein for an application (hereinafter, referred to as "application A") required for receiving the service X (step S504). If there is the application A, the procedure proceeds to step S505. On the other hand, if there is no application A, the procedure proceeds to step S506.

When it is determined that there is the application A, the electronic apparatus 1 inquires of the information management apparatus 4 whether there is update information related to the application A (step S505). If there is the update information related to the application A, the procedure proceeds to step S506. On the other hand, if there is no update information related to the application A, the procedure proceeds to step S508.

At step S506, the electronic apparatus 1 transmits to the portal site 3 a download notice for downloading the application A. Accordingly, the portal site accepts the download notice (step S701).

Upon receipt of the download notice, the portal site 3 reads the application A from the storage section thereof, and transmits the read application A to the electronic apparatus 1 (step S702). Accordingly, the electronic apparatus 1 receives the application A (step S507). Then, the procedure proceeds to step S508.

At step S508, the electronic apparatus 1 designates the service identifier of the service X to be implemented, and provides the information management apparatus 4 with a search request to search for the apparatus-specific information of an electronic apparatus corresponding to the service identifier of the service X (step S508). Accordingly, the information management apparatus 4 receives the search request.

Upon receipt of the search request, the information management apparatus 4 refers to the service-specific information, as shown in FIG. 3, which contains the service identifier of the service X, and specifies an electronic apparatus registered in the information management apparatus 4 from among electronic apparatuses registered in the service-compatible apparatus type contained in the service-specific information. Then, the information management apparatus 4 acquires apparatus-specific information related to the specified electronic apparatus (step S603). Next, the information management apparatus 4 transmits the acquired apparatus-specific information to the electronic apparatus 1 (step S604). Accordingly, the electronic apparatus 1 receives the apparatus-specific information as a search result (step S509). Note that at step S508, if the user does not designate the service identifier using the electronic apparatus 1, the information management apparatus 4 may transmit all apparatus-specific information stored therein.

Upon receipt of the apparatus-specific information, the electronic apparatus 1 displays on its display section (not shown) a listing of electronic apparatuses which can work in liaison with the electronic apparatus 1 to implement the service X (step S510). This allows the user of the electronic apparatus 1 registered in the information management apparatus 4 to obtain information related to electronic apparatuses required for receiving the service from among other electronic apparatuses registered in the information management apparatus 4.

Next, the user operates the input section (not shown), while viewing the display section of the electronic apparatus 1, to select another electronic apparatus to be used for implementing the service. Note that the electronic apparatus to be selected here is the electronic apparatus 2 (i.e., a DVD recorder). In this manner, the electronic apparatus 2 is selected by the electronic apparatus 1 (step S511).

After selecting the electronic apparatus 2, the electronic apparatus 1 transmits to the electronic apparatus 2 a service implementation request to implement the service X (step S512). Thereafter, the electronic apparatus 1 activates and implements the application A (step S513).

On the other hand, the electronic apparatus 2 having received the service implementation request determines whether the storage section thereof (not shown) has stored therein an application required for implementing the service X (hereinafter, referred to as "application B") (step S802). If the application B is stored, the procedure proceeds to step S803. On the other hand, if step S801 has determined that the application B is not stored, the procedure proceeds to step S804.

When it is determined that the application B is stored, the electronic apparatus 2 inquires of the information management apparatus 4 whether there is update information of the application B (step S803). If there is the update information, the procedure proceeds to step S804. On the other hand, if there is no update information, the procedure proceeds to step S806.

At step S804, the electronic apparatus 2 transmits to the portal site 3 a download notice for downloading the application B(stepS804). Accordingly, the portal site 3 receives the download notice (step S703).

Then, the portal site 3 retrieves the application B requested by the download notice from the storage section thereof (not shown), and transmits the retrieved application B to the electronic apparatus 2 (step S704). Accordingly, the electronic apparatus 2 receives the application B (step S805). Then, the procedure proceeds to step S806.

At step S806, the electronic apparatus 2 activates and implements the application B. This allows the electronic apparatuses 1 and 2 to work in liaison with each other to implement the service requested by the user.

As described above, the service search system according to the present embodiment allows a so-called horizontal service to be readily searched for.

Further, the service search system according to the present embodiment is able to reduce the number of accesses to the server as well as the communication load on the network.

Furthermore, in the service search system according to the present embodiment, the information management apparatus registers electronic apparatuses therein, and thus can manage services which can be provided using the registered electronic apparatuses, and also, the information management apparatus suitably transmits update information to the electronic apparatuses. Therefore, the user is able to suitably update an application installed in the user's electronic apparatus which is used for implementing the service.

Note that at step S302 of FIG. 7, upon receipt of the update information, the electronic apparatus 1 may automatically start a download, without prompting the user to determine whether to download. This eliminates the user's confirmation, thereby saving the user time and trouble.

Further still, at step S1 of FIG. 5, if the application is previously installed (i.e., preinstalled) in the electronic apparatus 1 (i.e., a mobile telephone), operations at steps 13, 21, and 22 can be eliminated. Specifically, in the case where the preinstalled application is intended for use in liaison with another electronic apparatus, and service-specific information related to the preinstalled application is stored in the storage section (not shown) of the electronic apparatus, the electronic apparatus transmits the service-specific information together with the apparatus-specific information. In response to this, the information management apparatus registers therein the transmitted service-specific information as well as the electronic apparatus. This eliminates processing between the electronic apparatus and the portal site (at steps S13, S21, and S22), and also reduces connection fees if the information management apparatus is connected to the portal site via a commercially provided communication line.

Further still, if an application is previously cached, the electronic apparatus may register therein service-specific information of service X corresponding to the previously cached application.

Note that although at step S14, the information management apparatus registers therein the service-specific information as shown in FIG. 3, in which the apparatus type is related to all electronic apparatuses which can be used for the service, without making any changes to the service-specific information, the entire service-specific information is not necessarily registered into the information management apparatus. For example, as for the service-compatible apparatus type and the application information contained in the service-specific information, the information management apparatus may select and register only portions corresponding to the apparatus type of the electronic apparatus registered in the information management apparatus. In this case, however, at the time of registering the apparatus-specific information, the information management apparatus is required to check whether the electronic apparatus can be registered as an electronic apparatus which can be used for services registered in the information management apparatus from among services which are registered in the portal site and can be implemented by using the electronic apparatus. If the electronic apparatus can be registered, the information management apparatus is required to additionally register the electronic apparatus in the corresponding service-specific information.

Further still, the portal site stores the same application information as that stored in the information management apparatus which, as shown in FIG. 3, contains the apparatus type, the application identifier, the application location information and the cache address. Accordingly, the information management apparatus is not required to store the application information so long as the information management apparatus stores therein information, such as a URL, which is related to a location at which the application information is stored. By eliminating the necessity of storing the application program in the information management apparatus, it is possible to achieve an effect of reducing the volume of data to be stored in the information management apparatus.

Further still, upon receipt of a notice that a service identifier has been deleted, the portal site determines that the service corresponding to the service identifier has been eliminated, and may transmit update information at step S202 in order to delete service-specific information corresponding to the service identifier from among service-specific information registered in the information management apparatus.

Further still, upon occurrence of an update, new registration, or elimination of the service-specific information, the portal site may notify the occurrence to the registered user' s electronic apparatus or the information management apparatus, and the information management apparatus may perform change processing, such as a deletion of an outdated information, after receiving a confirmation notice from the user.

Further still, at step S103 in the present embodiment, the information management apparatus automatically registers therein the update information of the service-specific information obtained from the portal site, and thereafter if the portal site notified the information management that update information of the service-specific information has occurred, the information management provides a notice of the occurrence of the update information to electronic apparatuses for use in the service from among electronic apparatuses registered in the information management apparatus.

Such a notice may be preferentially and selectively provided to an electronic apparatus (e.g., a mobile telephone) which is likely to be frequently used by the user. Upon receipt of the notice, the user instructs the information management apparatus to download information from the portal site and updates the information as necessary. Further, if the electronic apparatus has information required to be updated, the user may instruct the information management apparatus to transmit necessary information (an updated application related to the service or data corresponding to an update of the application) from the portal site through the information management apparatus to the electronic apparatus.

As shown in FIGs. 8 to 10, in the present embodiment, two electronic apparatuses download applications A and B from the portal site. However, the present invention is not limited to this manner of downloading the applications A and B. Specifically, the portal site stores the applications A and B and update information related to the applications A and B, and the information management apparatus downloads and acquires the applications A and B together with the update information from the portal site. Then, the information management apparatus provides the electronic apparatuses with a notice that the applications A and B have been updated. In response to the notice, the electronic apparatus may download the applications A and B from the information management information rather than from the portal site. Moreover, the information management apparatus may regularly acquire updates of the applications A and B from the portal site. In this case, the information management apparatus is required to have a storage section for storing the acquired updates of the applications A and B.

Further still, as shown in FIGs. 8 to 10, in the present embodiment, an electronic apparatus designates another electronic apparatus with which the electronic apparatus works in liaison to implement a service, and requests the information management apparatus to search for services which can be implemented by the electronic apparatuses. However, the present invention is not limited to such a manner of searching services. Specifically, the electronic apparatus may request the information management apparatus to search for services corresponding to the apparatus type of the electronic apparatus itself. In this case, the electronic apparatus is required to transmit its apparatus-specific information to the information management apparatus prior to or at the time of requesting of a service search.

Further still, in the case where a latest version of an application related to service X is cached or preinstalled in the electronic apparatus, it is not necessary to download the application. In this case, the electronic apparatus is prepared first to implement the service X, and thereafter another electronic apparatus may implement application B corresponding to the service X.

In one example of the service X, a service of preselecting a TV program is implemented by an electronic apparatus, and information for programming to record the preselected TV program is transmitted from the electronic apparatus to another electronic program which performs a programming service.

Further still, at step S602, the information management apparatus may select and transmit service-specific information related to a service which can be implemented by an electronic apparatus and another electronic apparatus registered in the information management apparatus from among searched service-specific information. This eliminates the need of steps S501, S502, S603, and S604, and also makes it possible for the user to efficiently perform a service selection at step S503.

Further still, downloading at steps S606 and S804 is not necessarily performed if the update information is a minor update and the applications A and B can work in liaison with each other to perform normal operations without being updated.

Further still, in the present embodiment, after a search for the service-specific information is performed, another search is performed to find an electronic apparatus registered in the information management apparatus from among electronic apparatuses associated with the service-specific information. However, these searches are not necessarily performed in the order as described above. For example, after a search for electronic apparatuses registered in the information management apparatus is performed, service-specific information related to services, which can be implemented between the user's electronic apparatus and the electronic apparatuses found by the initial search, may be searched, thereby selecting a desired service.

Further still, an electronic apparatus may have an additional function of deleting registration from the information management apparatus. In this case, the electronic apparatus designates the apparatus identifier thereof, and requests the information management apparatus to delete apparatus-specific information corresponding to the designated apparatus identifier. In response to this, the information management apparatus deletes the apparatus-specific information corresponding to the designated apparatus identifier. If the information management apparatus performs user authentication for deleting the apparatus-specific information, it is possible to prevent the apparatus-specific information from being deleted by a third party other than the user of the electronic apparatus, thereby increasing security for deletion.

Further still, when the apparatus-specific information is deleted, data related to the apparatus type of the electronic apparatus is also deleted from data related to the service-compatible apparatus type contained in the service-specific information related to the service which can be implemented by the electronic apparatus. As a result of this, if data of the service-compatible apparatus type contained in the service-specific information ceases to exist for electronic apparatuses registered in the information management apparatus, it is not necessary for the information management apparatus to have stored therein service-specific information related to services, which can be implemented by the electronic apparatus targeted for deletion, and therefore such service-specific information associated with the electronic apparatus targeted for deletion may also be deleted at the time of deleting the apparatus-specific information.

Further still, in addition to the additional function as described above, the electronic apparatus may have an additional function of deleting registered service-specific information.

Further still, for example, if a service frequently used by the user is made unavailable for some reasons, in some cases, it is preferable to delete information related to the service from the information management apparatus. In such an instance, the user's electronic apparatus designates the service identifier of the service and requests the information management apparatus to delete service-specific information related to the service. In response to this, the information management apparatus deletes the service-specific information.

Further still, by deleting an application related to the service from the electronic apparatus, it is made possible to leave no unnecessary information in a storage medium, such as a memory, within the electronic apparatus, thereby making it possible to more effectively utilize the storage medium.

Further still, if the information management apparatus performs user authentication for deleting the service-specific information, it is possible to prevent the service-specific information from being deleted by a third party other than the user of the electronic apparatus, thereby increasing security for deletion.

As shown in FIG. 5, if the user does not own an electronic apparatus required for implementing a service, the information management apparatus provides the user' s electronic apparatus with a notice of the type of the electronic apparatus which is not owned by the user. However, the present invention is not limited to this. Specifically, the information management apparatus may be configured so as not to store service-specific information related to the service, which cannot be implemented due to an absence of the electronic apparatus, from among service-specific information acquired at step S14. Alternatively, if the service-specific information related to the service, which cannot be implemented due to an absence of the electronic apparatus, has already been stored in the information management apparatus, the information management apparatus may delete the service-specific information.

### (Second Embodiment)

A second embodiment of the present invention will be described with respect to how information related to a service and electronic apparatuses is managed and how the service is implemented when three electronic apparatuses are used for implementing the service. The following description is directed in particular to a case where service Y is implemented using the information management apparatus 4 (a home server), an MPEG2 compatible streaming server (server A) for implementing streaming, an MPEG4 compatible streaming player (a mobile telephone), and a streaming server (server B) having a converter function for format conversion between the server A and the mobile telephone.

Note that the present embodiment is similar to the first embodiment except for contents of the service-specific information and the procedure for implementing a service. Differences between the first and second embodiments are described in detail below.

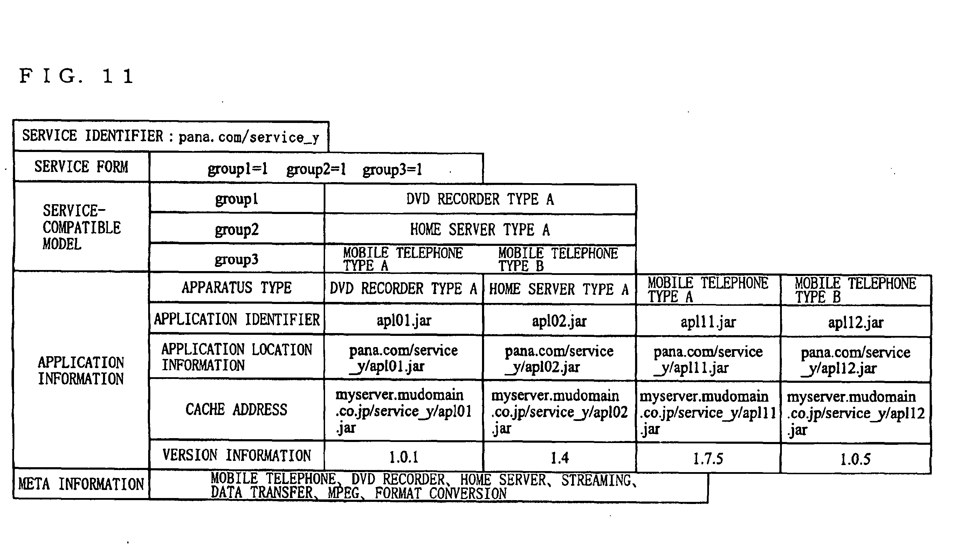

Firstly, the service-specific information related to service Y is described with reference to FIG. 11. FIG. 11 shows an example of the service-specific information according to the present embodiment. As in the first embodiment, the service-specific information contains a service identifier, a service form, a service-compatible apparatus type, application information, and meta information.

The service identifier can be described using a namespace, such as "pana.com/service_y". Alternatively, the service identifier may be an identifier which can be uniquely identified in a global space. Alternatively still, the service identifier can be a content ID defined by the Content ID Forum (Japan).

The service form is information which indicates the number of electronic apparatuses required in each group (groups 1 through 3) playing a role different from other groups in implementing the service. Specifically, the service form shown in FIG. 11 indicates that service Y can be implemented by a combination of one electronic apparatus in group 1, one electronic apparatus in group 2, and one apparatus in group 3.

The service-compatible apparatus type indicates types of electronic apparatuses corresponding to roles in the service. Specifically, in FIG. 11, DVD recorder type A corresponds to the type of an electronic apparatus having the role of group 1, a home server type A corresponds to the type of an electronic apparatus having the role of group 2, and mobile telephone types A and B correspond to the type of electronic apparatuses having the role of group 3.

The application information is related to an application to be operated on electronic apparatuses which implement the service. In the application information, for each apparatus type (in FIG. 11, the DVD recorder type A, the home server type A, and the mobile telephone types A and B), a destination to which the application is downloaded (i.e., address information) is described in the field of application location information, and information for uniquely identifying the application is described in the field of application identifier.

In FIG. 11, the application identifier is uniquely assigned to each apparatus type related to service Y. The application identifier may be globally unique and described by a URL (e.g., pana.com/service_y/apl01.jar). Regarding the cache address, if the home server has the application cached therein, information for accessing the cache may be described in the cache address.

Next, the procedure of service implementation is described. A mobile telephone acquires service-specific information from the home server, together with apparatus - specific information related to servers A and B used for implementing the service. Thereafter, the mobile telephone transmits a request for implementing service Y to the server A, and provides the server A with the service-specific information related to the service Y and the apparatus-specific information related to the server B. The mobile telephone also transmits a request for implementing the service Y to the server B, and provides the server B with the service-specific information related to the service Y and the apparatus-specific information related to the server A.

The server A determines whether it is possible to implement the service Y, and notifies the mobile telephone of a determination result. In this case, if an application related to the service Y is not present in the server A, the server A may download the application from a portal site or the home server. On the other hand, if the application related to the service Y is cached or preinstalled in the server A, downloading is not required. Alternatively, if the application of the mobile telephone is of a previous version, the server A may request the mobile telephone to upgrade the application. The server A implements the service Y after preparing itself for implementation of the service Y in a manner as described above.

Similarly, the server B determines whether it is possible to implement the service Y, and notifies the mobile telephone of a determination result. In this case, if an application related to the service Y is not present in the server B, the server B may download the application from a portal site or the home server. On the other hand, if the application related to the service Y is cached or preinstalled in the server B, downloading is not required. Alternatively, if the application of the mobile telephone is of a previous version, the server B may request the mobile telephone to upgrade the application. The server B implements the service Y after preparing itself for implementation of the service Y in a manner as described above.

In an alternative procedure, the mobile telephone transmits a request for implementing the service Y to the server A, together with the service-specific information related to the service Y and apparatus-specific information related to the mobile telephone and the server B, such that the request for implementing the service Y and the apparatus-specific information related to the mobile telephone are transmitted from the server A to the server B, thereby implementing the service Y.

### (Third Embodiment)

A third embodiment of the present invention will be described with respect to how information related to a service and electronic apparatuses is managed when electronic apparatuses 1 through N are used for implementing a pier-to-pier (P2P) service. The following description is directed in particular to a case where a chat service Z is implemented using the electronic apparatuses 1 through N (mobile telephones 1 through N) and an information management apparatus (a home server).

The present embodiment is similar to the first embodiment except for contents of the service-specific information and the procedure for implementing a service. Differences between the first and third embodiments are described in detail below.

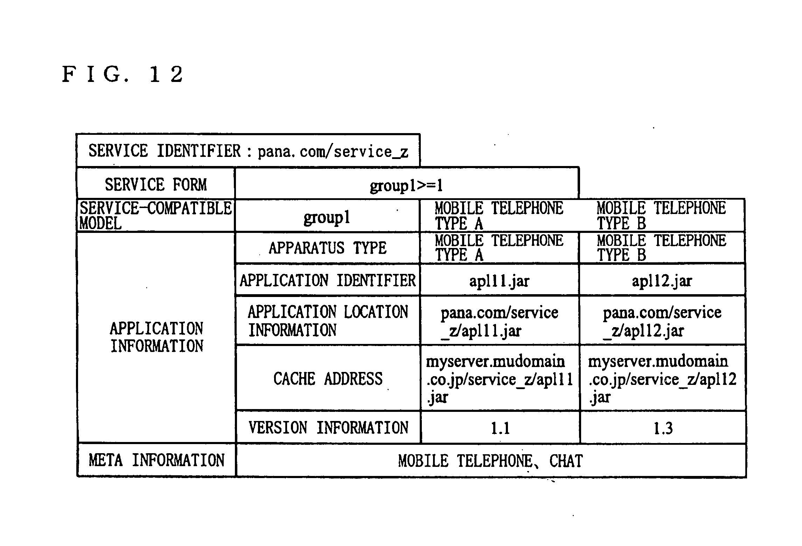

Firstly, the service-specific information related to service Z is described with reference to FIG. 12. FIG. 12 shows an example of the service-specific information according to the present embodiment. As in the first embodiment, the service-specific information contains a service identifier, a service form, a service-compatible apparatus type, application information, and meta information.

The service identifier can be described using a name space, such as "pana.com/service_z". Alternatively, the service identifier may be an identifier which can be uniquely identified in a global space. Alternatively still, the service identifier can be a content ID defined by the Content ID Forum (Japan).

The service form is information which indicates the number of electronic apparatuses required in a group (group 1) playing a role in implementing the service. Specifically, the service form shown in FIG. 11 indicates that service Z can be implemented by one electronic apparatus in group 1. The service-compatible apparatus type indicates types of electronic apparatuses corresponding to roles in the service. Specifically, in FIG. 12, mobile telephone types A and B correspond to the type of electronic apparatuses having the role of group 1.

The application information is related to an application related to the service. In the application information, for each apparatus type (in FIG. 12, the mobile telephone types A and B), a destination to which the application is downloaded (i.e., address information) is described in the field of application location information, and information for uniquely identifying the application is described in the field of application identifier.

In the example of FIG. 12, the application identifier is uniquely assigned to each apparatus type related to service Z. The application identifier may be globally unique and described by a URL (e.g., pana.com/service_z/apl01.jar). Regarding the cache address, if the home server has the application cached therein, information for accessing the cache may be described in the cache address.

Next, the procedure of service implementation is described. Firstly, a mobile telephone 1 starts a chat session. In this case, the mobile telephone 1 acquires service-specific information related to the service Z from the information management apparatus or the portal site, and downloads an application related to the service Z. Note that if the application related to the service Z is cached or preinstalled in the mobile telephone 1, the service is implemented without downloading the apparatus. Similar to the mobile telephone 1, a mobile telephone 2 activates the application related to the service Z, and enters the chat session started by the mobile telephone 1. In this manner, n mobile telephones are able to implement a chat service. Note that in a user participation type service, such as a chat service, an electronic apparatus does not transmit a request for activating an application to another electronic apparatus. Processing of connecting to another electronic apparatus via a network is different between applications related to different services, and is not related to the procedure for implementing a service in a service search system of the present invention.

## Claims

1. An information management apparatus (4) for managing service-related information in a system in which a plurality of electronic apparatuses (1 and 2) are linked via network so as to work in liaison with each other to implement a desired service, the apparatus comprising:
a service-specific information acquisition section for acquiring service-specific information which is related to a combination of types of electronic apparatuses (1 and 2) required for implementing a service, wherein the service-specific information further contains information related to an application operable on each of the electronic apparatuses (1 and 2) and used for implementing the service;
a storage section for storing at least one piece of service-specific information acquired by the service-specific information acquisition section;
an apparatus-specific information acquisition section for acquiring apparatus-specific information which is related to each of the plurality of electronic apparatuses (1 and 2);
a request reception section for receiving search requests from the electronic apparatuses (1 and 2);
a search section for, responsive to a search request received by the request reception section, searching for the service, which can be implemented by the electronic apparatuses (1 and 2), based on the service-specific information stored in the storage section and the apparatus-specific information acquired by the apparatus-specific information acquisition section; and
a transmission section for transmitting to the electronic apparatuses (1 and 2) a search result which is information indicating a listing of services which can be implemented by the electronic apparatuses (1 and 2),
**characterized in**
further comprising an update notification section for, if the information related to the application indicates an update of the application, notifying the electronic apparatuses (1 and 2) that the application has been updated.

2. The information management apparatus according to claim 1, further comprising an application acquisition section for, if the information related to the application indicates that an updated version of the application is available, acquiring the updated version of the application, wherein when the electronic apparatuses are notified of the update of the application, if the electronic apparatuses (1 and 2) provide the transmission section with a notice for downloading the updated application, the transmission section is adapted to transmit the updated application to the electronic apparatuses (1 and 2).

3. The information management apparatus (4) according to claim 1, wherein:
the apparatus-specific information acquisition section is adapted to acquire the apparatus-specific information associated with the electronic apparatuses (1 and 2) from the electronic apparatuses (1 and 2); and
the service-specific information acquisition section is adapted to acquire the service-specific information from a server (3) for managing the service-specific information which is present on the network.

4. The information management apparatus (4) according to claim 3, further comprising:
an inquiry section for inquiring of the server (3) whether the service-specific information stored in the storage section has been updated; and
a notification section for, if a result of the inquiry by the inquiry section indicates an update of the service-specific information, notifying the electronic apparatuses (1 and 2) the service-specific information has been updated.

5. The information management apparatus (4) according to claim 4, wherein the inquiry section is adapted to make an inquiry to the server (3) at regular intervals.

6. The information management apparatus (4) according to claim 4, further comprising an update section for, if a result of the inquiry by the inquiry section indicates an update of the service-specific information, updating the service-specific information stored in the storage section.

7. The information management apparatus (4) according to claim 1, wherein:
the apparatus-specific information acquisition section is adapted to acquire the apparatus-specific information associated with the electronic apparatuses (1 and 2) from the electronic apparatuses (1 and 2); and
the service-specific information acquisition section is adapted to acquire the service-specific information from the electronic apparatuses (1 and 2).

8. The information management apparatus (4) according to claim 1, wherein:
the information related to the combination of the types of the electronic apparatuses (1 and 2) which is contained in the service-specific information is related to a combination of models of the electronic apparatuses (1 and 2);
the information management apparatus further comprises a specification section which is adapted to refer to the service-specific information stored in the storage section and related to the service to be implemented by the electronic apparatuses (1 and 2), and to specify a model of one electronic apparatus (1 or 2) which works in liaison with another electronic apparatus to implement the service; and
the transmission section is adapted to transmit information which indicates the electronic apparatuses (1 and 2) specified by the specification section to the electronic apparatuses (1 and 2) which are used to implement the service.

9. The information management apparatus (4) according to claim 1, further comprising:
a cease confirmation section for confirming the presence or absence of a ceased service corresponding to the service-specific information stored in the storage section; and
a request section for, if the cease confirmation section determines that there is the ceased service among services associated with the service-specific information stored in the storage section, requesting the electronic apparatuses (1 and 2) having stored therein an application associated with the ceased service to delete the application therefrom.

10. The information management apparatus (4) according to claim 1, further comprising:
a cease confirmation section for confirming the presence or absence of a ceased service corresponding to the service-specific information stored in the storage section; and
a deletion section for, if the cease confirmation section determines that there is the ceased service among services associated with the service-specific information stored in the storage section, deleting the service-specific information associated with the ceased service from the storage section.

11. The information management apparatus (4) according to claim 1, further comprising:
an apparatus-specific information storage section for storing the apparatus-specific information acquired by the apparatus-specific information acquisition section; and
an information deletion section for, responsive to a request from the electronic apparatus, deleting the apparatus-specific information stored in the apparatus-specific information storage section.

12. The information management apparatus (4) according to claim 11, wherein the information deletion section is adapted to delete, responsive to the request from the electronic apparatuses (1 and 2), the apparatus-specific information while deleting service-specific information related to services for which the electronic apparatuses (1 and 2) associated with the deleted apparatus-specific information are used from among service-specific information related to services which can be implemented by the electronic apparatuses (1 and 2).

13. The information management apparatus (4) according to claim 1, wherein:
when an additional electronic apparatus (1 or 2) is added anew to the system, the apparatus-specific information acquisition section is adapted to acquire from the additional electronic apparatus (1 or 2) information related to a user of the additional electronic apparatus (1 or 2) together with the apparatus-specific information; and
the information management apparatus further comprises:
a user information management section for managing user-related information;
a user authentication section for determining whether to register the apparatus-specific information acquired by the apparatus-specific information acquisition section using the user-related information managed by the user information management section and the user-related information acquired by the apparatus-specific information acquisition section; and
an apparatus-specific information storage section for, if the user authentication section determines to register the apparatus-specific information, storing the apparatus-specific information acquired by the apparatus-specific information acquisition section.

14. The information management apparatus (4) according to claim 1, further comprising: an apparatus-specific information storage section for storing apparatus-specific information transmitted from and associated with the electronic apparatuses (1 and 2); and
an apparatus determination section for determining whether the apparatus-specific information corresponding to the electronic apparatuses (1 and 2) associated with the service-specific information obtained by the search section is stored in the apparatus-specific information storage section.

15. The information management apparatus (4) according to claim 14, further comprising an absent electronic apparatus notification section for, if the apparatus determination section determines that the apparatus-specific information corresponding to a type of an electronic apparatus (1 or 2) associated with the service-specific information obtained by the search section is not stored in the apparatus-specific information storage section, notifying the electronic apparatuses (1 and 2), which have provided a search request, of the type of the electronic apparatus (1 or 2) corresponding to the apparatus-specific information which is not stored in the apparatus-specific information storage section.

16. The information management apparatus (4) according to claim 14, wherein if the apparatus determination section determines that the apparatus-specific information corresponding to the type of the electronic apparatus (1 or 2) associated with the service-specific information obtained by the search section is not stored in the apparatus-specific information storage section, the storage section does not store the service-specific information obtained by the search section.

17. An information management method, wherein an information management apparatus (4) for managing service-related information in a system in which a plurality of electronic apparatuses (1 and 2) are linked via a network to work in liaison with each other to implement a desired service, carries out the following steps:
a service-specific information acquisition step for acquiring service-specific information related to a combination of types of electronic apparatuses required for implementing the service, wherein the service-specific information further contains information related to an application operable on each of the electronic apparatuses (1 and 2) and used for implementing the service;
a storage step for storing the service-specific information acquired by the service-specific information acquisition step into a storage section;
an apparatus-specific information acquisition step for acquiring the apparatus-specific information related to each of the plurality of the electronic apparatuses (1 and 2);
a request reception step for receiving a search request from the electronic apparatuses (1 and 2);
a search step for, in response to the search request received by the request reception step, searching services which can be implemented by the electronic apparatuses (1 and 2) based on the service-specific information stored in the storage section and the apparatus-specific information acquired by the apparatus-specific information acquisition step;
a transmission step for transmitting to the electronic apparatuses (1 and 2) a search result which is obtained by the search step and is information indicating a listing of services which can be implemented by the electronic apparatuses (1 and 2);
**characterized in**
further comprising an update notification step for, if the information related to the application indicates an update of the application, notifying the electronic apparatuses (1 and 2) that the application has been updated.

## Patentansprüche

1. Informationsverwaltungsvorrichtung (4) zum Verwalten dienstebezogener Information in einem System, in welchem eine Mehrzahl elektronischer Vorrichtungen (1 und 2) über ein Netzwerk verknüpft sind, um in gegenseitiger Verbindung zu arbeiten, um einen gewünschten Dienst auszuführen, wobei die Vorrichtung umfasst:
einen dienstespezifischen Informationserlangungsabschnitt zum Erlangen dienstespezifischer Information, welche sich auf eine Kombination von Typen elektronischer Vorrichtungen (1 und 2) bezieht, welche zum Ausführen des Dienstes erforderlich ist, wobei die dienstespezifische Information des Weiteren Information enthält, welche sich auf eine auf jede der elektronischen Vorrichtungen (1 und 2) durchführbaren Anwendung bezieht und zum Ausführen des Dienstes benutzt wird;
einen Speicherabschnitt zum Speichern zumindest eines Teils der vom dienstespezifischen Informationserlangungsabschnitt erlangten dienstespezifischen Information;
einen vorrichtungsspezifischer Informationserlangungsabschnitt zum Erlangen vorrichtungsspezifischer Information, welche sich auf jede der mehreren elektronischen Vorrichtungen (1 und 2) bezieht;
einen Empfangsanfrageabschnitt zum Empfangen von Suchanfragen der elektronischen Vorrichtungen (1 und 2);
einen Suchabschnitt, um auf eine von dem Empfangsanfrageabschnitt empfangene Suchanfrage antwortend, den Dienst zu suchen, welcher von der elektronischen Vorrichtung (1 und 2) ausgeführt werden kann, basierend auf der im Speicherabschnitt gespeicherten dienstespezifischen Information, und
der vom vorrichtungsspezifischen Informationserlangungsabschnitt erlangten vorrichtungsspezifischen Information; und
einen Übertragungsabschnitt zum Übertragen eines Suchergebnisses an die elektronischen Vorrichtungen (1 und 2), welches eine Auflistung von Diensten anzeigende Information darstellt, welche durch die elektronischen Vorrichtungen (1 und 2) ausgeführt werden kann,
**dadurch gekennzeichnet, dass**
des Weiteren ein Aktualisierungsmeldeabschnitt umfasst ist, um den elektronischen Vorrichtungen (1 und 2) zu melden, dass die Anwendung aktualisiert worden ist, falls die auf die Anwendung bezogene Information eine Aktualisierung der Anwendung anzeigt.

2. Informationsverwaltungsvorrichtung nach Anspruch 1, des Weiteren umfassend einen Anwendungsbeschaffungsabschnitt zum Erlangen der aktualisierten Version der Anwendung, falls die auf die Anwendung bezogene Information anzeigt, dass eine Aktualisierungsversion der Anwendung verfügbar ist, wobei, wenn den elektronischen Vorrichtungen eine Aktualisierung der Anwendung gemeldet wird, falls die elektronischen Vorrichtungen (1 und 2) dem Übertragungsabschnitt eine Meldung zum Herunterladen der aktualisierten Anwendung bereitstellen, der Übertragungsabschnitt angepasst wird, um die aktualisierte Anwendung an die elektronischen Vorrichtungen (1 und 2) zu übertragen.

3. Informationsverwaltungsvorrichtung (4) nach Anspruch 1, wobei:
der vorrichtungsspezifische Informationserlangungsabschnitt angepasst ist, um die den elektronischen Vorrichtungen (1 und 2) zugeordnete vorrichtungsspezifische Information von den elektronischen Vorrichtungen (1 und 2) zu erlangen; und
der dienstespezifische Informationserlangungsabschnitt angepasst ist, um die dienstespezifische Information von einem Server (3) zu erlangen, um die in dem Netzwerk vorliegende dienstespezifische Information zu verwalten.

4. Informationsverwaltungsvorrichtung (4) nach Anspruch 3, des Weiteren umfassend:
einen Abfrageabschnitt, um den Server (3) abzufragen, ob die in dem Speicherabschnitt gespeicherte dienstespezifische Information aktualisiert worden ist; und
einen Meldeabschnitt, um den elektronischen Vorrichtungen (1 und 2) zu melden, dass die dienstespezifische Information aktualisiert worden ist, wenn ein Ergebnis der Abfrage durch den Abfrageabschnitt eine Aktualisierung der dienstespezifischen Information anzeigt.

5. Informationsverwaltungsvorrichtung (4) nach Anspruch 4, wobei der Abfrageabschnitt angepasst ist, um eine Abfrage an den Server (3) in regelmäßigen Intervallen durchzuführen.

6. Informationsverwaltungsvorrichtung (4) nach Anspruch 4, des Weiteren umfassend einen Aktualisierungsabschnitt zum Aktualisieren der in dem Speicherabschnitt gespeicherten dienstespezifischen Information, wenn ein Ergebnis der Abfrage durch den Abfrageabschnitt eine Aktualisierung der dienstespezifischen Information anzeigt.

7. Informationsverwaltungsvorrichtung (4) nach Anspruch 1, wobei:
der vorrichtungsspezifische Informationserlangungsabschnitt angepasst ist, um die den elektronischen Vorrichtungen (1 und 2) zugeordnete vorrichtungsspezifische Information von den elektronischen Vorrichtungen (1 und 2) zu erlangen; und
der dienstespezifische Informationserlangungsabschnitt angepasst ist, um die dienstespezifische Information von den elektronischen Vorrichtungen (1 und 2) zu erlangen.

8. Informationsverwaltungsvorrichtung (4) nach Anspruch 1, wobei:
die auf die Kombination der Typen der elektronischen Vorrichtungen (1 und 2) bezogene Information, welche in der dienstespezifischen Information enthalten ist, auf eine Kombination von Modellen der elektronischen Vorrichtungen (1 und 2) bezogen ist;
die Informationsverwaltungsvorrichtung des Weiteren einen Spezifizierungsabschnitt umfasst, welcher angepasst ist, um auf die in dem Speicherabschnitt gespeicherte dienstespezifische Information zu verweisen und auf den von den elektronischen Vorrichtungen (1 und 2) auszuführenden Dienst bezogen ist; und um ein Modell einer elektronischen Vorrichtung (1 oder 2) zu spezifizieren, welches in Verbindung mit einer weiteren elektronischen Vorrichtung zum Ausführen des Dienstes arbeitet; und
der Übertragungsabschnitt angepasst ist, um Information zu übertragen, welche den durch den Spezifizierungsabschnitt spezifizierten elektronischen Vorrichtungen (1 und 2) die elektronischen Vorrichtungen (1 und 2) anzeigt, welche zum Ausführen des Dienstes benutzt werden.

9. Informationsverwaltungsvorrichtung (4) nach Anspruch 1, des Weiteren umfassend:
einen Einstellbestätigungsabschnitt zum Bestätigen des Vorliegens oder der Abwesenheit eines eingestellten Dienstes entsprechend der in dem Speicherabschnitt gespeicherten dienstespezifischen Information; und
einen Veranlassungsabschnitt zum Veranlassen der elektronischen Vorrichtungen (1 und 2), welche eine dem eingestellten Dienst zugeordnete Anwendung abgespeichert haben, die Anwendung daraus zu löschen, falls der Einstellbestätigungsabschnitt feststellt, dass der eingestellte Dienst unter den Diensten ist, welche der in dem Speicherabschnitt gespeicherten dienstespezifischen Information zugeordnet sind.

10. Informationsverwaltungsvorrichtung (4) nach Anspruch 1, des Weiteren umfassend:
einen Einstellbestätigungsabschnitt zum Bestätigen des Vorliegens oder der Abwesenheit eines eingestellten Dienstes entsprechend der in dem Speicherabschnitt gespeicherten dienstespezifischen Information; und
einen Löschabschnitt zum Löschen der dem eingestellten Dienst des Speicherabschnitts zugeordneten dienstespezifischen Information, falls der Einstellbestätigungsabschnitt feststellt, dass der eingestellte Dienst unter den Diensten ist, welche der in dem Speicherabschnitt gespeicherten dienstespezifischen Information zugeordnet sind.

11. Informationsverwaltungsvorrichtung (4) nach Anspruch 1, des Weiteren umfassend:
einen vorrichtungsspezifischen Informationsspeicherabschnitt zum Speichern der von dem vorrichtungsspezifischen Informationserlangungsabschnitt erlangten vorrichtungsspezifischen Information; und
einen Informationslöschabschnitt, um auf eine Anfrage der elektronischen Vorrichtung antwortend, die im vorrichtungsspezifischen Informationsspeicherabschnitt gespeicherte vorrichtungsspezifische Information zu löschen.

12. Informationsverwaltungsvorrichtung (4) nach Anspruch 11, wobei der Informationslöschabschnitt angepasst ist, um auf die Anfrage der elektronischen Vorrichtungen (1 und 2) antwortend, die vorrichtungsspezifische Information zu löschen, während dienstespezifische Information, welche sich auf Dienste bezieht, für welche die der gelöschten vorrichtungsspezifischen Information zugeordneten elektronischen Vorrichtungen (1 und 2) benutzt werden, unter der dienstespezifischen Information gelöscht wird, welche sich auf von den elektronischen Vorrichtungen (1 und 2) ausführbare Dienste bezieht.

13. Informationsverwaltungsvorrichtung (4) nach Anspruch 1, wobei:
wenn eine weitere elektronische Vorrichtung (1 oder 2) dem System neu hinzugefügt wird, der vorrichtungsspezifische Informationserlangungsabschnitt angepasst wird, um von der weiteren elektronischen Vorrichtung (1 oder 2) Information zu erlangen, welche sich auf einen Benutzer der weiteren elektronischen Vorrichtung (1 oder 2) zusammen mit der vorrichtungsspezifischen Information bezieht; und
die Informationsverwaltungsvorrichtung des Weiteren umfasst:
einen Benutzerinformationsverwaltungsabschnitt zum Verwalten benutzerbezogener Information;
einen Benutzerauthentifizierungsabschnitt zum Feststellen, ob die von dem vorrichtungsspezifischen Informationserlangungsabschnitt erlangte vorrichtungsspezifische Information, welche die von dem Benutzerinformationsverwaltungsabschnitt verwaltete benutzerbezogene Information und die von dem vorrichtungsspezifischen Informationserlangungsabschnitt erlangte benutzerbezogene Information benutzt zu registrieren ist; und
einen vorrichtungsspezifischen Informationsspeicherabschnitt zum Speichern der von dem vorrichtungsspezifischen Informationserlangungsabschnitt erlangte vorrichtungsspezifischen Information, falls der Benutzerauthentifizierungsabschnitt feststellt, dass die vorrichtungsspezifische Information zu registrieren ist.

14. Informationsverwaltungsvorrichtung (4) nach Anspruch 1, des Weiteren umfassend: einen vorrichtungsspezifischen Informationsspeicherabschnitt zum Speichern vorrichtungsspezifischer Information, welche von den elektronischen Vorrichtungen (1 und 2) übertragen wird und diesen zugeordnet ist; und
einen Vorrichtungsfeststellungsabschnitt zum Feststellen, ob die vorrichtungsspezifische Information entsprechend der elektronischen Vorrichtungen (1 und 2), welche der aus dem Suchabschnitt erhaltenen dienstespezifischen Information zugeordnet ist, in dem vorrichtungsspezifischen Informationsspeicherabschnitt gespeichert ist.

15. Informationsverwaltungsvorrichtung (4) nach Anspruch 14, des Weiteren umfassend einen abwesenden elektronischen Vorrichtungsmeldeabschnitt, um den elektronischen Vorrichtungen (1 und 2), welche eine Suchanfrage bereitgestellt haben, über den Typ der elektronischen Vorrichtungen (1 oder 2) entsprechend der vorrichtungsspezifischen Information, welche nicht in dem vorrichtungsspezifischen Informationsspeicherabschnitt gespeichert ist, zu melden, falls der Vorrichtungsfestlegungsabschnitt feststellt, dass die vorrichtungsspezifische Information entsprechend eines Typs einer elektronischen Vorrichtung (1 oder 2), welche der aus dem Suchabschnitt erhaltenen dienstespezifischen Information zugeordnet ist, nicht in dem vorrichtungsspezifischen Informationsspeicherabschnitt gespeichert ist.

16. Die Informationsverwaltungsvorrichtung (4) nach Anspruch 14, wobei der Speicherabschnitt die aus dem Suchabschnitt erhaltene dienstespezifische Information nicht speichert, falls der Vorrichtungsfeststellungsabschnitt feststellt, dass die vorrichtungsspezifische Information entsprechend des Typs der elektronischen Vorrichtung (1 oder 2), welche der aus dem Suchabschnitt erhaltenen dienstespezifischen Information zugeordnet ist, nicht in dem vorrichtungsspezifischen Informationsspeicherabschnitt gespeichert ist.

17. Informationsverwaltungsmethode, wobei eine Informationsverwaltungsvorrichtung (4) zum Verwalten dienstebezogener Information in einem System, in welchem eine Mehrzahl elektronischer Vorrichtungen (1 und 2) über ein Netzwerk verknüpft sind, um in gegenseitiger Verbindung zu arbeiten, um einen gewünschten Dienste auszuführen, die folgenden Schritte ausführt:
einen dienstespezifischen Informationserlangungsschritt zum Erlangen dienstespezifischer Information, welche sich auf eine Kombination von Typen elektronischer Vorrichtungen bezieht, welche zum Ausführen des Dienstes erforderlich ist, wobei die dienstespezifische Information des Weiteren Information enthält, welche sich auf eine auf jeder der elektronischen Vorrichtungen (1 und 2) durchführbare Anwendung bezieht und zum Ausführen des Dienstes benutzt wird;
einen Speicherschritt zum Speichern der durch den dienstespezifischen Informationserlangungsschritt erlangten dienstespezifischen Information in einem Speicherabschnitt;
einen vorrichtungsspezifischen Informationserlangungsschritt zum Erlangen der auf jede der mehreren elektronischen Vorrichtungen (1 und 2) bezogenen vorrichtungsspezifischen Information;
einen Empfangsanfrageschritt zum Empfangen einer Suchanfrage von den elektronischen Vorrichtungen (1 und 2);
einen Suchschritt, um auf die von dem Empfangsanfrageschritt empfangene Suchanfrage antwortend, Dienste zu suchen, welche von den elektronischen Vorrichtungen (1 und 2) ausgeführt werden können, basierend auf der in dem Speicherabschnitt gespeicherten dienstespezifischen Information und der vom vorrichtungsspezifischen Informationserlangungsschritt erlangten vorrichtungsspezifischen Information;
einen Übertragungsschritt zum Übertragen eines Suchergebnisses an die elektronischen Vorrichtungen (1 und 2), welches durch den Suchschritt erhalten wird und eine Auflistung von Diensten anzeigende Information dargestellt, welche durch die elektronischen Vorrichtungen (1 und 2) ausgeführt werden kann;
**dadurch gekennzeichnet, dass**
des Weiteren ein Aktualisierungsmeldeschritt umfasst ist, um den elektronischen Vorrichtungen (1 und 2) zu melden, dass die Anwendung aktualisiert worden ist, falls die auf die Anwendung bezogene Information eine Aktualisierung der Anwendung anzeigt.

## Revendications

1. Appareil de gestion d'informations (4) pour gérer des informations relatives à un service dans un système dans lequel une pluralité d'appareils électroniques (1 et 2) sont reliés par l'intermédiaire d'un réseau de manière à fonctionner en liaison l'un avec l'autre pour mettre en oeuvre un service désiré, l'appareil comprenant :
une section d'acquisition d'informations spécifiques au service pour acquérir des informations spécifiques au service qui sont associées à une combinaison de types d'appareils électroniques (1 et 2) requis pour mettre en oeuvre un service, dans laquelle les informations spécifiques au service contiennent en outre des informations associées à une application pouvant être mise en oeuvre sur chacun des appareils électroniques (1 et 2) et utilisée pour mettre en oeuvre le service ;
une section de stockage pour stocker au moins une pièce d'information spécifique au service acquise par la section d'acquisition d'informations spécifiques au service ;
une section d'acquisition d'informations spécifiques à l'appareil pour acquérir des informations spécifiques à l'appareil qui sont associées à chacun de la pluralité d'appareils électroniques (1 et 2) ;
une section de réception de requête pour recevoir des requêtes de recherche des appareils électroniques (1 et 2) ;
une section de recherche pour, en réponse à une requête de recherche reçue par la section de réception de requête, rechercher le service, qui peut être mis en oeuvre par les appareils électroniques (1 et 2), sur la base des informations spécifiques au service stockées dans la section de stockage et les informations spécifiques à l'appareil acquise par la section d'acquisition d'informations spécifiques à l'appareil ; et
une section de transmission pour transmettre aux appareils électroniques (1 et 2) un résultat de recherche qui est une information indiquant une liste de services qui peuvent être mis en oeuvre par les appareils électroniques (1 et 2),
**caractérisé en ce qu'**il comprend en outre une section de notification de mise à jour pour, si les informations associées à l'application indiquent une mise à jour de l'application, notifier aux appareils électroniques (1 et 2) que l'application a été mise à jour.

2. Appareil de gestion d'informations selon la revendication 1, comprenant en outre une section d'acquisition d'application pour, si les informations associées à l'application indiquent qu'une version mise à jour de l'application est disponible, acquérir la version mise à jour de l'application, dans lequel, lorsque les appareils électroniques sont notifiés de la mise à jour de l'application, si les appareils électroniques (1 et 2) envoient à la section de transmission une notification de téléchargement de l'application mise à jour, la section de transmission est adaptée pour transmettre l'application mise à jour aux appareils électroniques (1 et 2).

3. Appareil de gestion d'informations (4) selon la revendication 1, dans lequel :
la section d'acquisition d'informations spécifiques à l'appareil est adaptée pour acquérir les informations spécifiques à l'appareil associées aux appareils électroniques (1 et 2) à partir des appareils électroniques (1 et 2) ; et
la section d'acquisition d'informations spécifiques au service est adaptée pour acquérir les informations spécifiques au service à partir d'un serveur (3) pour gérer les informations spécifiques au service qui sont présentes sur le réseau.

4. Appareil de gestion d'informations (4) selon la revendication 3, comprenant en outre :
une section de demande pour demander au serveur (3) si les informations spécifiques au service stockées dans la section de stockage ont été mises à jour ; et
une section de notification pour, si un résultat de la demande par la section de demande indique une mise à jour des informations spécifiques au service, notifier aux appareils électroniques (1 et 2) que les informations spécifiques au service ont été mises à jour.

5. Appareil de gestion d'informations (4) selon la revendication 4, dans lequel la section de demande est adaptée pour faire une demande au serveur (3) à intervalles réguliers.

6. Appareil de gestion d'informations (4) selon la revendication 4, comprenant en outre une section de mise à jour pour, si un résultat de la demande par la section de demande indique une mise à jour des informations spécifiques au service, mettre à jour les informations spécifiques au service stockées dans la section de stockage.

7. Appareil de gestion d'informations (4) selon la revendication 1, dans lequel :
la section d'acquisition d'informations spécifiques à l'appareil est adaptée pour acquérir les informations spécifiques à l'appareil associées aux appareils électroniques (1 et 2) à partir des appareils électroniques (1 et 2) ; et
la section d'acquisition d'informations spécifiques au service est adaptée pour acquérir les informations spécifiques au service à partir des appareils électroniques (1 et 2).

8. Appareil de gestion d'informations (4) selon la revendication 1, dans lequel :
les informations associées à la combinaison des types des appareils électroniques (1 et 2) qui sont contenues dans les informations spécifiques au service sont associées à une combinaison de modèles des appareils électroniques (1 et 2) ;
l'appareil de gestion d'informations comprend en outre une section de spécification qui est adaptée pour faire référence aux informations spécifiques au service stockées dans la section de stockage et associées au service à mettre en oeuvre par les appareils électroniques (1 et 2), et pour spécifier un modèle d'un appareil électronique (1 ou 2) qui fonctionne en lien avec un autre appareil électronique pour mettre en oeuvre le service ; et
la section de transmission est adaptée pour transmettre les informations qui indiquent les appareils électroniques (1 et 2) spécifiés par la section de spécification aux appareils électroniques (1 et 2) qui sont utilisés pour mettre en oeuvre le service.

9. Appareil de gestion d'informations (4) selon la revendication 1, comprenant en outre :
une section de confirmation d'arrêt pour confirmer la présence ou l'absence d'un service arrêté correspondant aux informations spécifiques au service stockées dans la section de stockage ; et
une section de requête pour, si la section de confirmation d'arrêt détermine qu'il y a le service arrêté parmi les services associés aux informations spécifiques au service stockées dans la section de stockage, demander aux appareils électroniques (1 et 2) ayant stockée dans ceux-ci une application associée au service arrêté de supprimer l'application de ceux-ci.

10. Appareil de gestion d'informations (4) selon la revendication 1, comprenant en outre :
une section de confirmation d'arrêt pour confirmer la présence ou l'absence d'un service arrêté correspondant aux informations spécifiques au service stockées dans la section de stockage ; et
une section de suppression pour, si la section de confirmation d'arrêt détermine qu'il y a le service arrêté parmi les services associés aux informations spécifiques au service stockées dans la section de stockage, supprimer les informations spécifiques au service associées au service arrêté de la section de stockage.

11. Appareil de gestion d'informations (4) selon la revendication 1, comprenant en outre :
une section de stockage d'informations spécifiques à l'appareil pour stocker les informations spécifiques à l'appareil acquises par la section d'acquisition d'informations spécifiques à l'appareil ; et
une section de suppression d'informations pour, en réponse à une requête de l'appareil électroniques, supprimer les informations spécifiques à l'appareil stockées dans la section de stockage d'informations spécifiques à l'appareil.

12. Appareil de gestion d'informations (4) selon la revendication 11, dans lequel la section de suppression d'informations est adaptée pour supprimer, en réponse à la requête des appareils électroniques (1 et 2), les informations spécifiques à l'appareil tout en supprimant les informations spécifiques au service associées aux services pour lesquels les appareils électroniques (1 et 2) associés aux informations spécifiques à l'appareil supprimées sont utilisés de parmi les informations spécifiques au service associées aux services qui peuvent être mis en oeuvre par les appareils électroniques (1 et 2).

13. Appareil de gestion d'informations (4) selon la revendication 1, dans lequel :
lorsqu'un appareil électronique (1 ou 2) additionnel est nouvellement ajouté au système, la section d'acquisition d'informations spécifiques à l'appareil est adaptée pour acquérir de l'appareil électronique (1 ou 2) additionnel les informations associées à un utilisateur de l'appareil électronique (1 ou 2) additionnel en même temps que les informations spécifiques à l'appareil ; et
l'appareil de gestion d'informations comprend en outre :
une section de gestion d'informations sur l'utilisateur pour gérer les informations relatives à l'utilisateur ;
une section d'authentification de l'utilisateur pour déterminer s'il faut enregistrer les informations spécifiques à l'appareil acquises par la section d'acquisition d'informations spécifiques à l'appareil en utilisant les informations relatives à l'utilisateur gérées par la section de gestion d'informations sur l'utilisateur et les informations relatives à l'utilisateur acquises par la section d'acquisition d'informations spécifiques à l'appareil ; et
une section de stockage des informations spécifiques à l'appareil pour, si la section d'authentification de l'utilisateur détermine d'enregistrer les informations spécifiques à l'appareil, stocker les informations spécifiques à l'appareil acquises par la section d'acquisition d'informations spécifiques à l'appareil.

14. Appareil de gestion d'informations (4) selon la revendication 1, comprenant en outre : une section de stockage des informations spécifiques à l'appareil pour stocker les informations spécifiques à l'appareil transmises des et associées aux appareils électroniques (1 et 2) ; et
une section de détermination d'appareil pour déterminer si les informations spécifiques à l'appareil correspondant aux appareils électroniques (1 et 2) associés aux informations spécifiques au service obtenues par la section de recherche sont stockées dans la section de stockage des informations spécifiques à l'appareil.

15. Appareil de gestion d'informations (4) selon la revendication 14, comprenant en outre une section de notification d'appareil électronique absent pour, si la section de détermination d'appareil détermine que les informations spécifiques à l'appareil correspondant à un type d'un appareil électronique (1 ou 2) associé aux informations spécifiques au service obtenues par la section de recherche ne sont pas stockées dans la section de stockage d'informations spécifiques à l'appareil, notifier aux appareils électroniques (1 et 2), qui ont fourni une requête de recherche, du type de l'appareil électronique (1 ou 2) correspondant aux informations spécifiques à l'appareil qui ne sont pas stockées dans la section de stockage d'informations spécifiques à l'appareil.

16. Appareil de gestion d'informations (4) selon la revendication 14, dans lequel si la section de détermination d'appareil détermine que les informations spécifiques à l'appareil correspondant au type de l'appareil électronique (1 ou 2) associé aux informations spécifiques au service obtenues par la section de recherche ne sont pas stockées dans la section de stockage d'informations spécifiques à l'appareil, la section de stockage ne stocke pas les informations spécifiques au service obtenues par la section de recherche.

17. Procédé de gestion d'informations, dans lequel un appareil de gestion d'informations (4) pour gérer les informations relatives à un service dans un système dans lequel une pluralité d'appareils électroniques (1 et 2) sont liés par l'intermédiaire d'un réseau pour fonctionner en liaison l'un avec l'autre pour mettre en oeuvre un service désiré, effectue les étapes suivantes :
une étape d'acquisition d'informations spécifiques au service pour acquérir les informations spécifiques au service associées à une combinaison de types d'appareils électroniques requis pour mettre en oeuvre le service, dans laquelle les informations spécifiques au service contiennent en outre des informations associées à une application pouvant être mise en oeuvre sur chacun des appareils électroniques (1 et 2) et utilisée pour mettre en oeuvre le service
une étape de stockage pour stocker les informations spécifiques au service acquises à l'étape d'acquisition d'informations spécifiques au service dans une section de stockage ;
une étape d'acquisition d'informations spécifiques à l'appareil pour acquérir les informations spécifiques à l'appareil associées à chacun de la pluralité des appareils électroniques (1 et 2) ;
une étape de réception de requête pour recevoir une requête de recherche des appareils électroniques (1 et 2) ;
une étape de recherche pour, en réponse à la requête de recherche reçue à l'étape de réception de requête, rechercher les services qui peuvent être mis en oeuvre par les appareils électroniques (1 et 2) sur la base des informations spécifiques au service stockées dans la section de stockage et des informations spécifiques à l'appareil acquises à l'étape d'acquisition d'informations spécifiques à l'appareil ;
une étape de transmission pour transmettre aux appareils électroniques (1 et 2) un résultat de recherche qui est obtenu à l'étape de recherche et qui est une information indiquant une liste des services qui peuvent être mis en oeuvre par les appareils électroniques (1 et 2) ;
**caractérisé en ce qu'**il comprend en outre une étape de notification de mise à jour pour, si les informations associées à l'application indiquent une mise à jour de l'application, notifier aux appareils électroniques (1 et 2) que l'application a été mise à jour.
